# EUROPEAN PATENT APPLICATION

(11) **EP 4 012 395 A1**
(43) Date of publication of application: **15.06.2022**
(21) Application number: 20213560.4
(22) Date of filing: 11.12.2020
(51) Int. Cl.: G01N 27/447

(54) **FREE-FLOW ELECTROPHORESIS METHOD FOR SEPARATING ANALYTES**

(71) Applicant: Weber, Gerhard, 85551 Kirchheim (DE); Weber, Christoph, 86163 Augsburg (DE)
(72) Inventor: Weber, Gerhard, 85551 Kirchheim (DE); Weber, Christoph, 86163 Augsburg (DE)
(74) Representative: Engelhard, Markus

(57) **Abstract**

The present invention relates to methods for separating at least one analyte of interest from a sample containing a mixture of analytes, said method comprising performing a free flow electrophoresis (FFE) on said sample using at least two aqueous separation media wherein each aqueous separation medium comprises a pair of a buffer acid and a buffer base, each of said buffer acid and buffer base having a pKₐ-value, pKₐ(acid) and pKₐ(base), respectively, wherein said buffer acid and said buffer base are chosen such that | pKₐ(acid) - pKₐ(base) | ≤ 1.5. The present invention further relates to kits suitable for use in the free-flow electrophoresis methods of the invention.

## Description

The present invention relates to methods for separating at least one analyte of interest from a sample containing a mixture of analytes, said method comprising performing a free flow electrophoresis (FFE) on said sample using at least two aqueous separation media wherein each aqueous separation medium comprises a pair of a buffer acid and a buffer base, each of said buffer acid and buffer base having a pKₐ-value, pKₐ(acid) and pKₐ(base), respectively, wherein said buffer acid and said buffer base are chosen such that | pKₐ(acid) - pKₐ(base) | ≤ 1.5. The present invention further relates to kits suitable for use in the free-flow electrophoresis methods of the invention.

### BACKGROUND OF THE INVENTION

Free-flow electrophoresis (FFE) is one of the most versatile preparative-scale fractionation and separation techniques available in (bio)chemistry. It is a powerful technique for the separation of a broad range of analytes, including molecules and particles. The basic principle underlying FFE is such that a separation medium flows through a separation chamber in a flow direction, whereby upon application of an electric field in the separation medium by an anode and a cathode the analytes are separated from each other. The anode and the cathode are located at a distance from each other and the separation medium flows between the anode and the cathode. FFE supports all modes of electrophoresis such as zone electrophoresis (ZE), field-step electrophoresis (FSE), isotachophoresis (ITP), and isoelectric focusing (IEF).

In free-flow interval zone electrophoresis (FF-IZE), separation media consisting of only one acid and only one base can be utilized. The separation of analyte(s) is carried in only one separation medium at a constant value of said separaration medium (as described in German patent application DE 19 711 898.4). Separation media for FF-ZE and FF-IEF, which also consist of one acid and one base, were also described by Bier *et. al.* (1993). The basic requirement for these media was: pKₐ (acid) = pKₐ (base) + 2.5-3. By varying the relative concentration of acid and base, separation media with different pH values with increments of 1 pH unit can be obtained. Said media have favorable low values of conductivity, but also the following disadvantage: due to the low ratio of ionized species the buffer capacity is too low and amphoteric analytes interfere with the pH profile during the separation procees. Thus, the separation results accomplished when performing ZE are not comparable to other electrophoretic techniques, as pronounced band broadening due to the effect of electrophoretic dispersion, will be caused by the big difference in the values of the electrophoretic mobility of the ions inside the medium and the analytes. In case of IEF, the use of the media, as described by Bier *et. al.* (1993), will give rise to a separation of single species, if the difference of pI> 0.3 and the relative concentration will be low. All other species with relative high concentration will not be separated at all.

It is, thus, an objective of the present invention to provide improved means and methods for performing free-flow electrophoresis, which are particurlarly suitable for separation of biological compounds from samples, such as isoforms of proteins.

### SUMMARY OF THE INVENTION

According to the present invention this object is solved by providing a method for separating at least one analyte of interest from a sample containing a mixture of analytes. Said method of the invention comprises
- performing a free flow electrophoresis (FFE) on said sample using at least two aqueous separation media for separating analytes by FFE, by flowing said at least two aqueous separation media in a flow direction in a separation chamber and by applying an electric field between two electrodes across said separation chamber;
wherein, in said at least two aqueous separation media, each of said aqueous separation media comprises a pair of a buffer acid and a buffer base, each of said buffer acid and buffer base having a pKₐ-value, pKₐ(acid) and pKₐ(base), respectively, wherein, for each of said at least two aqueous separation media, said buffer acid and said buffer base are chosen such that | pKₐ(acid) - pKₐ(base) | ≤ 1.5.

According to the present invention this object is solved by providing a kit suitable for use in a free-flow electrophoresis method according to the present invention. Said kit of the invention comprises
at least two aqueous separation media, and,
optionally, an instruction leaflet,
wherein, in said at least two aqueous separation media, each of said aqueous separation media comprises a pair of a buffer acid and a buffer base, each of said buffer acid and buffer base having a pKₐ-value, pKₐ(acid) and pKₐ(base), respectively, wherein, for each of said at least two aqueous separation media, said buffer acid and said buffer base are chosen such that | pKₐ(acid) - pKₐ(base) | ≤ 1.5.

### DESCRIPTION OF THE PREFERRED EMBODIMENTS OF THE INVENTION

Before the present invention is described in more detail below, it is to be understood that this invention is not limited to the particular methodology, protocols and reagents described herein as these may vary. It is also to be understood that the terminology used herein is for the purpose of describing particular embodiments only, and is not intended to limit the scope of the present invention which will be limited only by the appended claims. Unless defined otherwise, all technical and scientific terms used herein have the same meanings as commonly understood by one of ordinary skill in the art. For the purpose of the present invention, all references cited herein are incorporated by reference in their entireties.

Concentrations, amounts, and other numerical data may be expressed or presented herein in a range format. It is to be understood that such a range format is used merely for convenience and brevity and thus should be interpreted flexibly to include not only the numerical values explicitly recited as the limits of the range, but also to include all the individual numerical values or sub-ranges encompassed within that range as if each numerical value and sub-range is explicitly recited. As an illustration, a numerical range of "1 to 20" should be interpreted to include not only the explicitly recited values of 1 to 20, but also include individual values and sub-ranges within the indicated range. Thus, included in this numerical range are individual values such as 1, 2, 3, 4, 5 .... 17, 18, 19, 20 and sub-ranges such as from 2 to 10, 8 to 15, etc. This same principle applies to ranges reciting only one numerical value, such as "at least 2". Furthermore, such an interpretation should apply regardless of the breadth of the range or the characteristics being described.

### FFE separation method utilizing specific pair(s) of buffer acid and acid base as separation medium

The present invention provides a method for separating at least one analyte of interest from a sample containing a mixture of analytes, said method comprising
- performing a free flow electrophoresis (FFE) on said sample using at least one aqueous separation medium for separating analytes by FFE, by flowing said at least one aqueous separation medium in a flow direction in a separation chamber and by applying an electric field between two electrodes across said separation chamber;
wherein said at least one aqueous separation medium comprises a pair of a buffer acid and a buffer base, each of said buffer acid and buffer base having a pKₐ-value, pKₐ(acid) and pKₐ(base), respectively, wherein said buffer acid and said buffer base are chosen such that | pKₐ(acid) - pKₐ(base) | ≤ 1.5.

As outlined above, the present invention provides a method for separating at least one analyte of interest from a sample containing a mixture of analytes. Said method of the invention comprises:
- performing a free flow electrophoresis (FFE) on said sample using at least two aqueous separation media for separating analytes by FFE, by flowing said at least two aqueous separation media in a flow direction in a separation chamber and by applying an electric field between two electrodes across said separation chamber;
wherein, in said at least two aqueous separation media, each of said aqueous separation media comprises a pair of a buffer acid and a buffer base, each of said buffer acid and buffer base having a pKₐ-value, pKₐ(acid) and pKₐ(base), respectively, wherein, for each of said at least two aqueous separation media, said buffer acid and said buffer base are chosen such that | pKₐ(acid) - pKₐ(base) | ≤ 1.5.

The expression " | pKₐ(acid) - pKₐ(base) ≤ 1.5" as used herein could also be expressed as pKₐ(acid) - pKₐ(base) ≤ ±1.5. Likewise, the expression " | pKₐ(acid) - pKₐ(base) | ≤ 1.0" as used herein could also be expressed as pKₐ(acid) - pKₐ(base) ≤ ±1.0.

In a preferred embodiment, the method of the present invention comprises:
- performing a free flow electrophoresis (FFE) on said sample using a plurality of aqueous separation media for separating analytes by FFE;
wherein, in said plurality of aqueous separation media, each of said aqueous separation media comprises a pair of a buffer acid and a buffer base, each of said buffer acid and buffer base having a pKₐ-value, pKₐ(acid) and pKₐ(base), respectively, wherein, for each of said aqueous separation media, said buffer acid and said buffer base are chosen such that | pKₐ(acid) - pKₐ(base) | ≤ 1.5, wherein, preferably, in said plurality of aqueous separation media, there are at least 3, 4, 5, 6, 7, 8, 9, 10, 11, 12, 13, 14, 15, 16, 17, 18, 19 or 20 aqueous separation media, preferably at least 3, 4, 5, 6, 7, 8, 9 or 10 aqueous separation media.

Preferably, said buffer acid and said buffer base are chosen such that | pKₐ(acid) - pKₐ(base) | ≤ 1.0.

Preferably, in said at least two aqueous separation media or in said plurality of aqueous separation media, at least 2, preferably at least 3, 4, 5, 6, 7, 8, 9, 10 or all of said separation media differ from each other in their respective pH.

Preferably, the pH is increasing from the anode in the direction to the cathode.

In a preferred embodiment, the total pH range covered by the direction from anode to cathode is from 4.5 to 9, and sub-ranges therein.

Preferably, said at least two aqueous separation media or said plurality of aqueous aqueous separation media are flowed adjacent to each other in a flow direction in said separation chamber, and wherein adjacent separation media differ in their respective pH by ΔpH, wherein 0.01 ≤ ΔpH < 1.5, preferably 0.1 ≤ ΔpH < 1.0.

In one embodiment, said at least two aqueous separation media or said plurality of aqueous aqueous separation media are flowed adjacent to each other in a flow direction in said separation chamber, and wherein adjacent separation media differ in their respective pH by ΔpH, wherein 0.1 ≤ ΔpH < 0.4.

In one embodiment, said at least two aqueous separation media or said plurality of aqueous separation media are flowed adjacent to each other in a flow direction in said separation chamber, and wherein at least 2 of said separation media which are flowed adjacent to each other have the same pH.

Preferably, said free flow electrophoresis (FFE) is performed as:
continuous free flow electrophoresis (continuous FFE), or
interval free flow electrophoresis (interval FFE).

In "continuous FFE", after loading of a sample containing an analyte of interest or suspected of containing an analyte of interest, an electrical current is applied continuously whilst said aqueous aqueous separation medium or aqueous separation media is/are flowed in said flow direction in said separation chamber.

In "interval FFE", after loading of a sample containing an analyte of interest or suspected of containing an analyte of interest, the flow of aqueous separation medium or media is turned off and an electrical current is applied only whilst the flow of aqueous separation medium or media is turned off, and wherein, after a desired electrophoretic separation has been achieved, the application of said electrical current is stopped and the flow of aqueous separation medium is resumed.

In an embodiment, where the analyte of interest has an isoelectric point pI > 7, a cathionic mode of separation is preferred, and can be separated in an optimum pH-range pHₒₚₜ, the pH of one separation medium is preferably chosen to be in such an optimum pH-range pHₒₚₜ, wherein
pHₒₚₜ = pI of said analyte of interest, in case the FFE is performed as a continuous FFE, or pI-0.6 < pHₒₚₜ ≤ pI, in case the FFE is performed as an interval FFE.

In an embodiment, where the analyte of interest has an isoelectric point pI < 7, an anionic mode of separation is preferred, and can be separated in an optimum pH-range pHₒₚₜ, the pH of one separation medium is preferably chosen to be in such an optimum pH-range pHₒₚₜ, wherein
pHₒₚₜ = pI of said analyte of interest, in case the FFE is performed as a continuous FFE, or pI ≤ pHₒₚₜ < pI + 0.6, in case the FFE is performed as an interval FFE.

Said buffer acid (in said pair of a buffer base and a buffer acid) is selected from acids with a pKs value ranging from 4 to 9; and said buffer base (in said pair of a buffer base and a buffer acid) is selected from bases with a pKs value ranging from 4 to 9. Preferably the selected acid or base will fullfil the following requirements:
they are monovalent acid(s) / base(s),
they have a low or moderate value of electrophoretic mobility,
they have excellent solubility in water,
they are compatible with analytical methods which are possibly used after the FFE method of the present invention.

Preferably, said buffer **base** in said pair of a buffer base and a buffer acid is selected from histidine, bis(2-hydroxyethyl)amino-tris(hydroxymethyl)methane (BISTRIS), N-hydroxyethylmorpholine (morpholinoethanol), triethanolamine (TEA), tris(hydroxymethyl)aminomethane (TRIS), glycine, glycylglycine, β-alanine, piperidine-4-carbonic acid, γ-aminobutyric acid (GABA), ε-aminocaproic acid (EACA), acetylimidazole, creatinine, imidazole, morpholine, ammediole, diethanolamine, ethanolamine, trimethylamine.

Preferably, said buffer **acid** in said pair of a buffer base and a buffer acid is selected from propionic acid, 2-(N-morpholino)ethanesulfonic acid (MES), 2-hydroxy-3-morpholin-4-ylpropane-1-sulfonic acid (MOPSO), N-(2-acetamido)-2-aminoethanesulfonic acid (ACES), 2-(4-(2-Hydroxyethyl)-1-piperazinyl)-ethanesulfonic acid (HEPES), 3-(N-morpholino)propanesulfonic acid (MOPS), glycylglycine, 3-[N-tris(hydroxymethyl)methylamino]-2-hydroxypropanesulfonic acid (TAPSO), 2-(bis(2-hydroxyethyl)amino)acetic acid (BICINE), 4-(2-Hydroxyethyl)-1-piperazinepropanesulfonic acid (EPPS), N-(1,1-dimethyl-2-hydroxyethyl)-3-amino-2-hydroxypropanesulfonic acid (AMPSO), 2-(cyclohexylamino)ethanesulfonic acid (CHES), [tris(hydroxymethyl)methylamino]propanesulfonic acid) (TAPS), acetylglycine, mandelic acid, malic acid, aspirine, gluconic acid, acetoacetic acid, barbituric acid, α-hydroxyisobutyric acid (HIBA), glutamic acid, isobutyric acid, acetic acid, nicotinic acid, pivalic acid, picolinic acid, pyridinethansulfonic acid, diacetylacetone, 2-[[1,3-dihydroxy-2-(hydroxymethyl)propan-2-yl]amino]ethanesulfonic acid (TES), veronal, 4-(N-morpholino)butanesulfonic acid (MOBS), triglycine, tricine, N-(2-hydroxyethyl)piperazine-N'-(4-butanesulfonic acid) (HEPBS), N-tris(hydroxymethyl)methyl-4-aminobutanesulfonic acid (TABS), acetylacetone, 3-(cyclohexylamino)-2-hydroxy-1-propanesulfonic acid (CAPSO), glycine, β-alanine, γ-aminobutyric acid (GABA), piperidine-4-carboxylic acid (Pip.4-carb), 4-(cyclohexylamino)-1-butanesulfonic acid (CABS), ε-aminocaproic acid (EACA), acetoacetamide, N,N-dimethyl-acetoacetamide.

Preferably, said pair of a buffer base and a buffer acid is selected from histidine and propionic acid;
BISTRIS and propionic acid;
morpholinoethanol / MES;and
TEA and MOPSO;
TEA and ACES;
TEA and MOPS:
TRIS and HEPES;
TRIS and TES
histidine and MES;
BISTRIS and MES;
morpholinoethanol and MOPSO;
morpholinoethanol and ACES;
morpholinoethanol and MOPS;
TEA and HEPES;
   TEA and TES
   TEA and glycylglycine;
   TRIS and TAPSO;
   TRIS and BICINE;
   histidine and MOPSO;
   histidine and ACES;
   BISTRIS and MOPS;
   morpholinoethanol and EPPS;
   TEA and TAPSO;
   TEA and TAPS;
   TEA and taurine;
   TRIS and AMPSO;
   TRIS and CHES.

For example:
for a pH of a separation medium in the acidic range of from 4.5 to 6.5, a pair of buffer base and buffer acid is used that is preferably selected from
histidine and propionic acid (having a range from pH 4.5 to 6.5),
morpholinoethanol and MES (having a range from pH 5.5 to 7.5),
histidine and MES (having a range from pH 5.5 to 6.5).

For example:
for a pH of a separation medium in the range of from 4.5 to 7.0, a pair of buffer base and buffer acid is used that is preferably selected from
BISTRIS and propionic acid (having a range from pH 4.5 to 7.0),
BISTRIS and another acid, such as isobutyric acid, pivalic acid, acetic acid or nicotinic acid (having a range from pH 4.5 to 7.0).

For example,
for a pH of a separation medium in the range of from 5.5 to 7.0, a pair of buffer base and buffer acid is used that is preferably selected from
BISTRIS and MES (having a range from pH 5.5 to 7.0),
BISTRIS and another acid, such as pyridinethansulfonicc acid or picolinic acid (having a range from pH 5 to 7).

For example,
for a pH of a separation medium in the range of from 6 to 7-7.5, a pair of buffer base and buffer acid is used that is preferably selected from
histidine and MOPSO (having a range from pH 6.0 to 7.0),
histidine and ACES (having a range from pH 6.0 to 7.0),
BISTRIS and MOPS (having a range from pH 6.5 to 7.5),
morpholinoethanol and MOPSO (having a range from pH 6.3 to 7.5),
morpholinoethanol and ACES (having a range from pH 6.3 to 7.5),
morpholinoethanol and MOPS (having a range from pH 6.6 to 7.5).

For example,
for a pH of a separation medium in the range of from 6.3 to 8.2, a pair of buffer base and buffer acid is used that is preferably selected from
TEA and MOPSO (having a range from pH 6.3 to 8.2),
TEA and ACES (having a range from pH 6.3 to 8.2).

For example,
for a pH of a separation medium in the range of about 7.5, a pair of buffer base and buffer acid is used that is preferably selected from
morpholinoethanol and EPPS (having a range from pH 7 to 8),
TEA and HEPES (having a range from pH 7 to 8.2),
TEA and glycylglycine (having a range from pH 7.2 to 8.2),
TEA and MOPS (having a range from pH 6.6 to 8.2).

For example,
for a pH of a separation medium in the range of from 7.6 to 9, a pair of buffer base and buffer acid is used that is preferably selected from
TEA and TAPSO (having a range from pH 7.6 to 8.4),
TEA and taurine (having a range from pH 8 to 8.8),
TRIS and TAPSO (having a range from pH 7.8 to 9),
TRIS and BICINE (having a range from pH 7.6 to 9).

For example,
for a pH of a separation medium in the range of from 8.2 to 9.4, a pair of buffer base and buffer acid is used that is preferably selected from
TRIS and AMPSO (having a range from pH 8.3 to 9),
TRIS and CHES (having a range from pH 8.6 to 9.4).

Preferably, in each separation medium, the concentration of said buffer acid is, independently, in a range of from 1 mM to 500 mM, preferably 10 to 50 mM, and the concentration of said buffer base is, independently, in a range of from 1 mM to 500 mM, preferably 10 to 50 mM.

Preferably,in each of said aqueous separation media, the respective buffer acid is partially dissociated to provide an anion, and the respective buffer base is partially dissociated to provide a cation.

Preferably, said analyte of interest is selected from cells, cell compartments, exosomes, nanoparticles, nanobeads, nanodiscs, viruses, biological compounds,
said biological compounds preferably being selected from proteins, nucleic acids, lipids, fats, carbohydrates, and secondary metabolites,
wherein, more preferably, said biological compounds are charged molecules.

In a preferred embodiment, said analyte of interest is a biological compound, which is plasma protein(s), a fusion protein and/or isoform(s) of a protein.

In a preferred embodiment, said analyte of interest are exosomes.

In preferred embodiments, furthermore an anode stabilization medium, a cathodic stabilization medium and/or a dosage medium are used.

In a preferred embodiment, furthermore an ampholyte is used.

The method of the present invention is preferably utilized for separating isoforms of protein.

### Kit for the FFE methods of the invention

As outlined above, the present invention provides a kit suitable for use in a free-flow electrophoresis method according to the present invention.

Said kit of the invention comprises
at least one aqueous separation medium, and,
optionally, an instruction leaflet.

According to the invention and as defined above, said at least one aqueous separation medium comprises a pair of a buffer acid and a buffer base, each of said buffer acid and buffer base having a pKₐ-value, pKₐ(acid) and pKₐ(base), respectively, wherein said buffer acid and said buffer base are chosen such that | pKₐ(acid) - pKₐ(base) | ≤ 1.5.

In a preferred embodiment, said buffer acid and said buffer base are chosen such that | pKₐ(acid) - pKₐ(base) | ≤ 1.0.

In a preferred embodiment, the kit according to the present invention comprises
at least two aqueous separation media,
wherein, in said at least two aqueous separation media, each of said aqueous separation media comprises a pair of a buffer acid and a buffer base, each of said buffer acid and buffer base having a pKₐ-value, pKₐ(acid) and pKₐ(base), respectively, wherein, for each of said at least two aqueous separation media, said buffer acid and said buffer base are chosen such that | pKₐ(acid) - pKₐ(base) | ≤ 1.5,

or wherein said buffer acid and said buffer base are chosen such that | pKₐ(acid) - pKₐ(base) | ≤ 1.0.

In a preferred embodiment, the kit according to the present invention comprises
a plurality of aqueous separation media,
wherein, in said plurality of aqueous separation media, each of said aqueous separation media comprises a pair of a buffer acid and a buffer base, each of said buffer acid and buffer base having a pKₐ-value, pKₐ(acid) and pKₐ(base), respectively, wherein, for each of said aqueous separation media, said buffer acid and said buffer base are chosen such that | pKₐ(acid) - pKₐ(base) | ≤ 1.5,
or wherein said buffer acid and said buffer base are chosen such that | pKₐ(acid) - pKₐ(base) | ≤ 1.0.

Preferably, in said plurality of aqueous separation media, there are at least 3, 4, 5, 6, 7, 8, 9, 10, 11, 12, 13, 14, 15, 16, 17, 18, 19 or 20 aqueous separation media preferably at least 3, 4, 5, 6, 7, 8, 9 or 10 aqueous separation media.

Said buffer **base** in said pair of a buffer base and a buffer acid is preferably selected from the buffer bases as defined herein.

Said buffer **acid** in said pair of a buffer base and a buffer acid is selected from the buffer acids as defined herein.

Said pair of a buffer base and a buffer acid is preferably selected from the pairs as defined herein.

Preferably, said pair of a buffer base and a buffer acid is selected from
histidine and propionic acid;
BISTRIS and propionic acid;
morpholinoethanol and MES;
TEA and MOPSO;
TEA and ACES;
TEA and MOPS:
TRIS and HEPES;
TRIS and TES histidine and MES;
BISTRIS and MES;
morpholinoethanol and MOPSO;
morpholinoethanol and ACES;
morpholinoethanol and MOPS;
TEA and HEPES;
TEA and glycylglycine;
TRIS and TAPSO;
TRIS and BICINE;
histidine and MOPSO;
histidine and ACES;
BISTRIS and MOPS;
morpholinoethanol and EPPS;
TEA and TAPSO;
TEA and TES
TEA and TAPS;
TEA and taurine;
TRIS and AMPSO;
TRIS and CHES.

### Further description of preferred embodiments

The method of free-flow electrophoresis allows for the micro-preparative as wells as the preparative separation of analytes, such as the isolation of bioparticles under native conditions, as well as the isolation of biopolymers under native and under denaturing conditions. Particularly important are:
- Native separation of isoforms of proteins;
- Native isolation of exosomes from cell culture supernatants and from plasma;
- Native isolation of protein complexes from raw homogenates of cells and plasma.

During the native separation of isoforms of proteins isoelectric focussing is used as separation method during analytical capillary electrophoresis as well as FFE, in particular in the presence of commercially available ampholytes and polymer as stabilisator.

In case of FFE, the user wants to investigate the separated protein isoforms with further analytical methods, where the ampholytes and the polymer interfere with said further analytical methods, such as mass spectrometry. Further purification would be necessary.

Such disadvantages can be obviated by the means and methods of the present invention.

The present inventors have now surprisingly found that by choosing the pairs of buffer acid and buffer base for the at least one separation medium in FFE, according to the requirements as described herein, several advantages can be accomplished compared FFE methods/separation media of the prior art:
- At an identical concentration of buffer acid and buffer base a significantly higher buffer capacity is accomplished for respective separation media. Thereby, a significantly improved stability of the pH profile can be guaranteed, in particular under conditions of electrophoretically moving amphoteric analytes, which could change the pH value of a separation medium with low buffer capacity, especially with increasing amounts of the moving analyte (since the method is performed with preparative amounts of sample / analyte(s));
- In separation media with the combination of buffer acid(s) and buffer base(s) according to the requirements for the relative pKₐ values, (as defined according to the present invention), the acid as well as the base is only partially ionized and, thus, the conductivity is significantly reduced in case the sum of molarities of the acid-base-pair is equal; whereas in separation media of the prior art at least one part of said pair or both parts are fully ionized and, thus, need to have a higher value of electrical conductivity;
- Separation media with reduced concentrations of the ionized part of acid or base, respectively, guarantee a higher value of electrical mobility of the analyte (theory of Debeye and Hückel). Now, higher values of electrical mobility of the analytes allow for shorter separation times while still resulting in the desired quality of separation.

The inventors further were able to accomplish to optimally choose the width and volume requirement of each separation medium and, thus, to choose the increase of the pH profile. Said increase of the pH profile is in particular important for the fine separation of isoforms of proteins having differences in their pI values in the range of only 0.1 delta-pI. Such increase of the pH profile needs to be in the range of:
0.01 < Delta pH / mm < 0.05 in case of an intended fine separation, whereas the increase of the pH-profile between the medium inside the area of injection of sample and it's neighboring medium can reach up to a value of 0.9.

Furthermore, with the methods of the present invention, the inventors were able to perform preparative separation of analytes from cell cultures or biological samples, such as plasma or urine.

Such samples contain a high concentrion of sodium chloride (up to 150 mM) among many other ionic components with a smaller concentration (in the range of 50 µM to 5 mM). At the start of an electrophoretic separation process , the ion with the highest value of elctrophoretic mobility moves faster than other ionic analytes to the front of the sample and reaches a higher concentration, the other slower analytes also become more concentrated. This effect is described as "stacking". In case that all analytes of the sample to be separated have a high enough solubility and no tendency to complex formation, the start and continuation of the separation process occurs without interferences, such as precipitation or formation of artifical and hardly soluble complexes. However, in case of samples containing a lot of different proteins with a relatively high concentration, such as plasma samples, the possibility for precipitation is prevented by diluting the sample before separation. The required pre-dilution however limits the maximum sample capacity of any electrophoretic separation process, also of FFE, because any increase in volume rate of the sample leads - in case of zone electrophoresis - to a gradual loss of separation performance due to the resulting broadening of the starting band. If in the following separation process, separation is carried out by zone electrophoresis in several separation media with different pH values (as according to the invention) instead of in one separation medium with a constant pH, all amphoteric analytes are gradually concentrated such that even the strong broadening of the starting band can be compensated.

There exists a variety of methods for isolating exosomes from cell cultures. However, most of these methods result only in mediocre purity when exosomes are to be isolated from plasma samples, in combination with a poor recovery rate. Antigen-specific chromatography results in very good purity of certain sub-populations of exosomes but not for all kinds of exosomes. This method can only provide a mediocre capacity in throughput.

FFE, in particular the method of the present invention, is the only separation method which provides the following advantages:
- Representation of the total amount of the exosomes with "low loss";
- Good discrimination of sub-fractions because of the very different surface charges;
- High throughput of samples, up to 5 ml undiluted plasma per hour;
- Many samples can be processed because of the continuous process;
- Simultaneous parallel processes can be carried out (n = up to 3) with the possibility to process > 500 samples within 12 hours.

The use of the separation medium histidin / propionic acid is preferred for separating / isolating exosomes, especially from plasma samples.

Due to the large differences uin the surface charge of the exosomes, also separation media such as histidin / MES, BISTRIS / MES and morpholinoethanol / MES, are highly suitable.

The following examples and drawings illustrate the present invention without, however, limiting the same thereto.

### BRIEF DESCRIPTION OF THE DRAWINGS

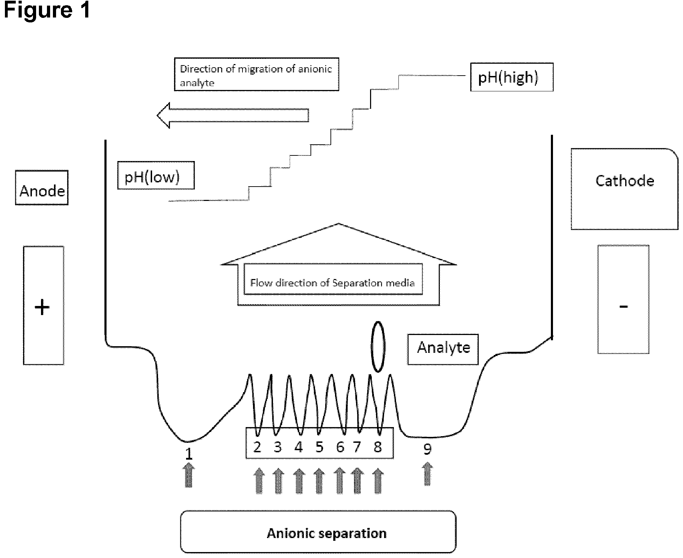

**Figure 1** *Embodiment of the method of the invention providing an anionic separation.* Shown is an illustration of an embodiment of the method of the invention wherein the separation is an anionic separation. In such anionic separation the analyte of interest is an anion. Separation medium consists of individual separation media 2, 3, 4, 5, 6, 7 and 8 which differ in their pH value. Due to such difference in pH value a step-gradient is formed over the separation area. Separation medium is flanked on the side of the cathode by border stabilization medium 9 and on the side of the anode by border stabilization medium 1. Both border stabilization medium 1 and border stabilization medium 9 have a conductivity which is increased compared to conductivity of individual separation media 2, 3, 4, 5, 6, 7 and 8. As the analyte of interest is an anion Analyte which is a mixture of analytes or a sample, is applied to individual separation medium 8 which is closer to the cathode (-) than to the anode (+) and thus to an individual separation medium having a comparatively higher pH value than most of the other individual separation media. Under the influence of the electric field the analyte of interest being moved along the direction of the separation medium will be separated from the remaining analytes. As the analyte of interest is an anion it will move to the anode as indicated by the arrow "direction of migration of analyte".

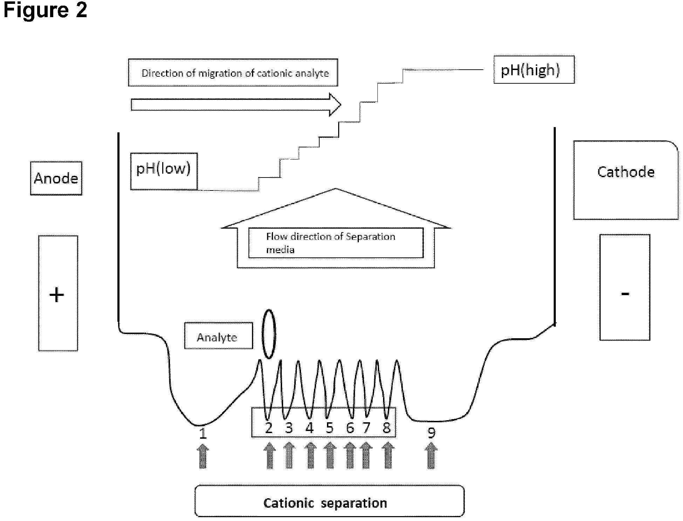

**Figure 2** *Embodiment of the method of the invention providing a cationic separation.* Shown is an illustration of a further embodiment of the method of the invention wherein the separation is a cationic separation. In such separation the analyte of interest is a cation. As the analyte of interest is a cationic Analyte which is a mixture of analytes or a sample, is applied to individual separation medium 2 which is closer to the anode (+) than to the cathode (-) and thus to an individual separation medium having a comparatively lower pH value than most of the other individual separation media. Under the influence of the electrical field the analyte of interest being moved along the direction of the separation medium will be separated from the remaining analytes. As the analyte of interest is a cation it will move to the cathode as indicated by the arrow "direction of migration of analyte". Otherwise, the method is similar to the one described in connection with Figure 1.

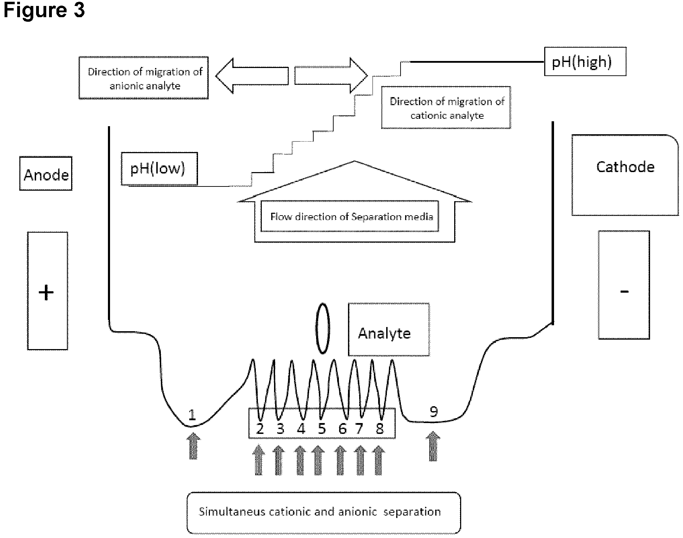

**Figure 3** *Embodiment of the method of the invention providing a simultaneous anionic and cationic separation.*
   Shown is an illustration of a further embodiment of the method of the invention wherein the separation is a simultaneous cationic separation and anionic separation. Separation medium consists of individual separation media 2, 3, 4, 5, 6, 7and 8 which differ in their pH value. Due to such difference in pH value a step-gradient is formed over separation medium. Separation medium is flanked on the side of the cathode by border stabilization medium 9 and on the side of the anode by border stabilization medium 1. Both border stabilization medium 1 and border stabilization medium 9 have a conductivity which is increased compared to conductivity of individual separation media. In such separation the analyte comprises an analyte of interest which is a cation and an analyte of interest which is an anion. Because of this, Analyte which is a mixture of analytes or a sample, is applied to individual separation medium 5 which is about equally distant from both the cathode and the anode and thus to an individual separation medium having a pH value which is in the middle of the pH values defined by the individual separation media 2 and 8. Under the influence of the electrical field the analyte of interest being moved along the direction of the separation medium will be separated from the remaining analytes. The cationic analyte of interest being a cation will move to the cathode as indicated by the arrow "direction of migration of cationic analyte", whereas the anionic analyte of interest being an anion will move to the anode as indicated by the arrow "direction of migration of anionic analyte". Otherwise, the method is similar to the one described in connection with Figure 1 and 2.

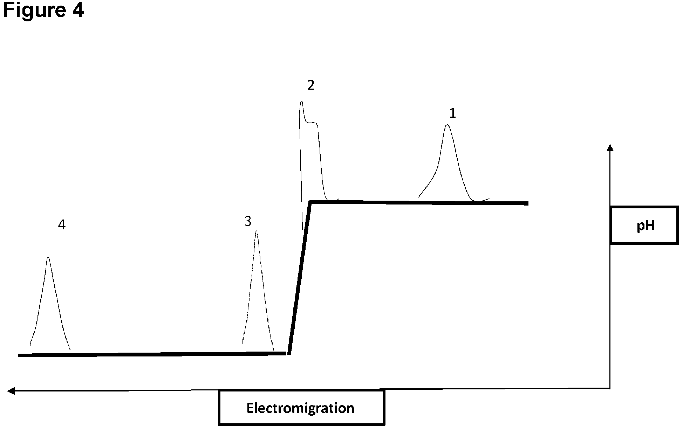

**Figure 4** *The effect arising from pH step-gradients on separation efficiency.*
   Shown is an illustration of the effect arising from a pH step-gradient on separation efficiency. More specifically, Fig. 4 shows the different band widths of any anionic amphoteric analyte of interest at the interface of individual separation media having different pH values. Band width decreases and the concentration of the analyte increases in the maximum of the band due to a significant decrease in electrophoretic migration of the analyte when passing from one individual separation medium to another individual separation medium. This kind of advantageous effect can be observed irrespective of whether the method of the invention is carried out as an interval free flow electrophoresis or as a continuous free flow electrophoresis.

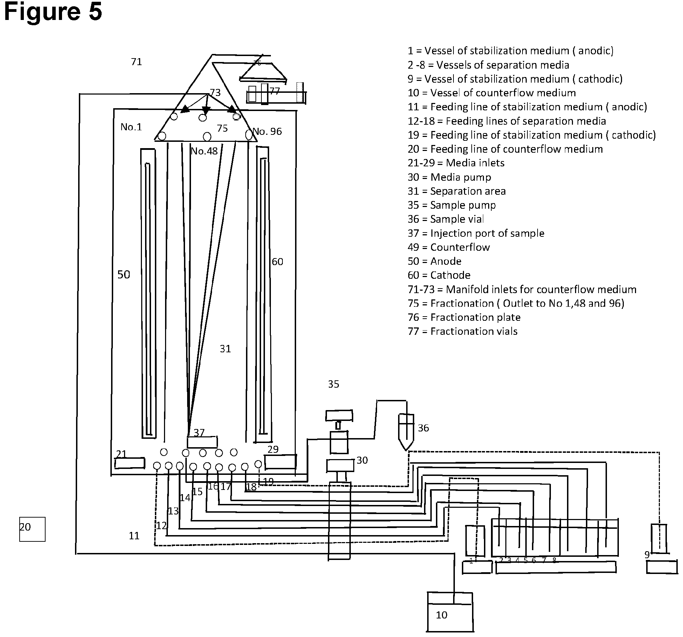

**Figure 5** *Device for free-flow electrophoresis suitable for performing of the method of the invention.*
   The individual separation media inside the vessels 2 to 8 are supplied by means of pump 30 and the media feeding lines 12 to 18 to the media inlets 22 until 28.
   Additionally, two border stabilization media inside the vessels 1 and 9 are transported by pump 30 via the feeding lines 11 and 19 and via the media inlets 21 and 29 into the separation medium 31, which functions as the separation area, in the neighborhood of the anode 50 and cathode 60. Furthermore, a counterflow medium is supplied by pump 30 from vessel 10 via the feeding line 20 to the manifold inlets 71, 72 and 73 and will enter to the fractionation area 75.
   Analytes are supplied from sample container 36 by means of pump 35 to injection port 37. The thus applied analytes are transported along the flow direction of the separation medium formed by individual separation media 8 to fractionation area 75 comprising fractionation plate 76 with fractionation vials 77. At fraction area 75 indivual fractions of the separation medium are collected. The Fig. describes the migration path of two different analytes, if the separation process will be operated as a continuous free-flow electrophoresis method. Voltage is applied to the anode 50 and cathode 60 for the entire period of time while the analyte migrates along the separation area. If operated so as to realize an interval free-flow electrophoresis, voltage is applied to the anode and cathode only for a certain period of time during the migration of the analyte along the separation medium. The migration path of the analytes will look like parallel zones of migration.

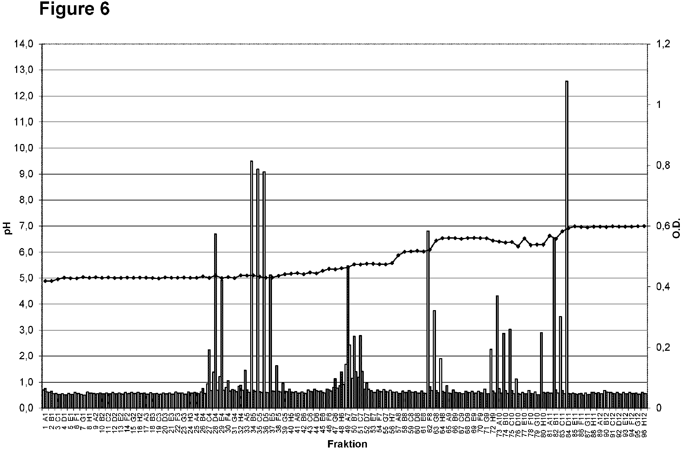

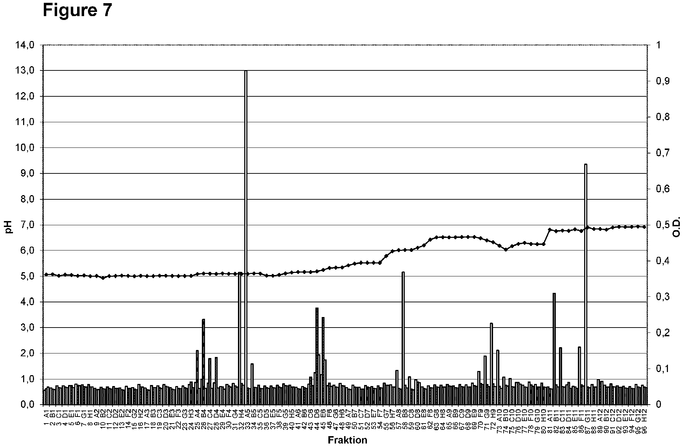

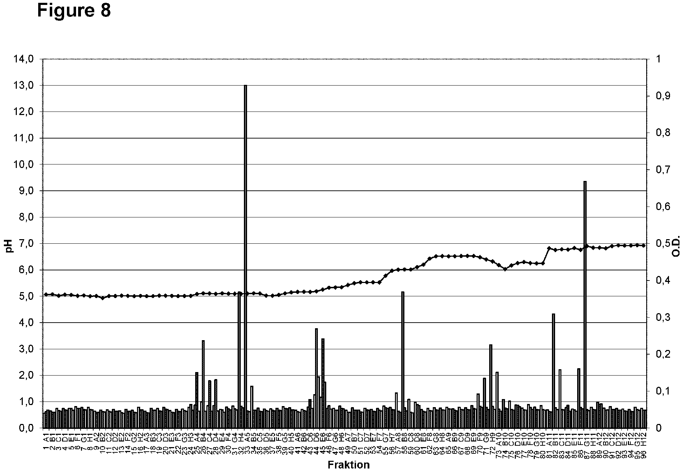

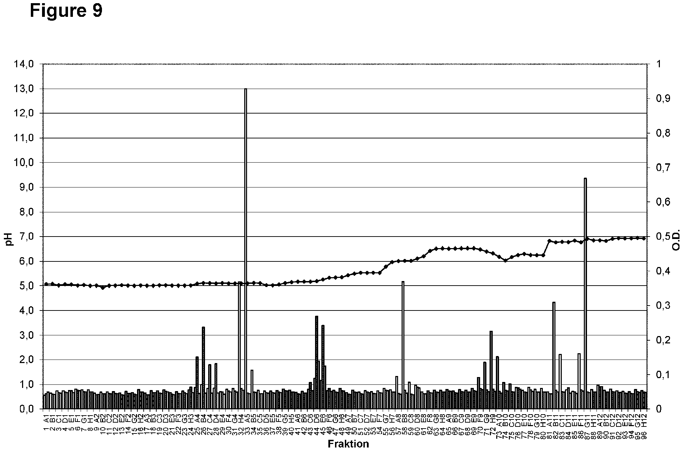

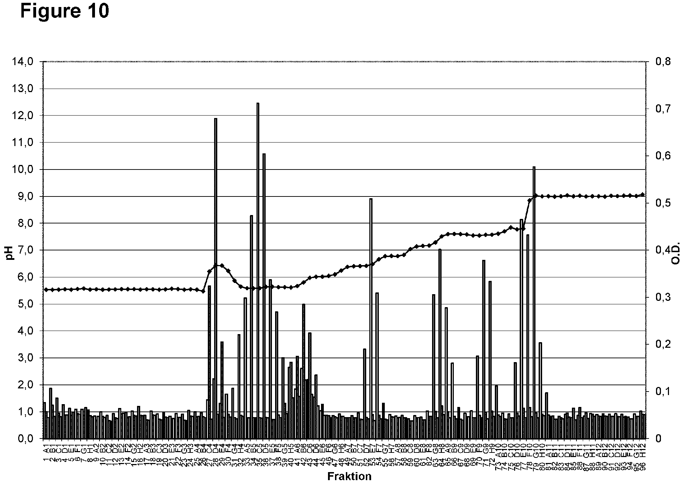

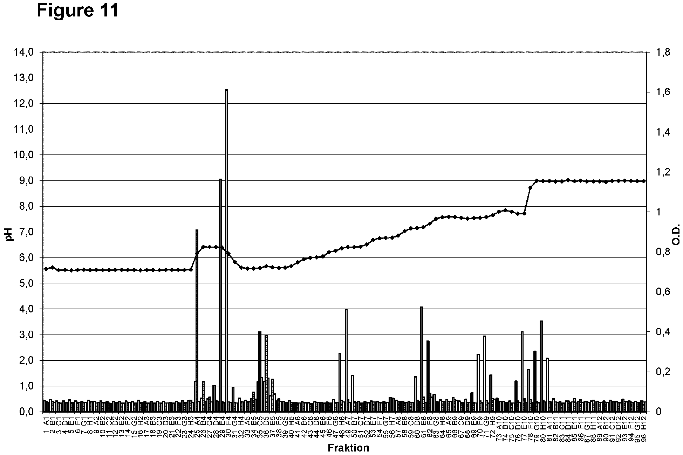

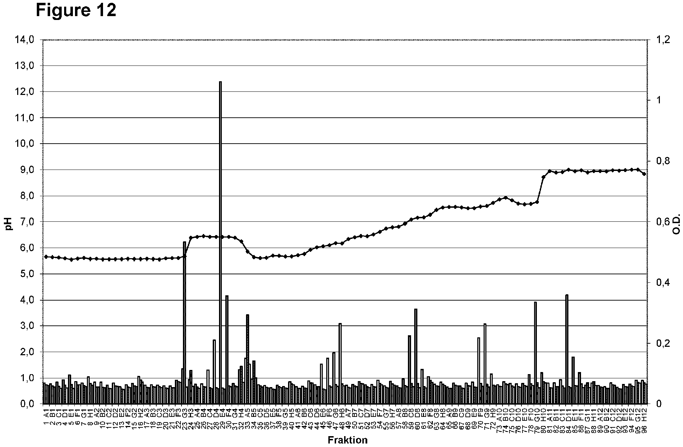

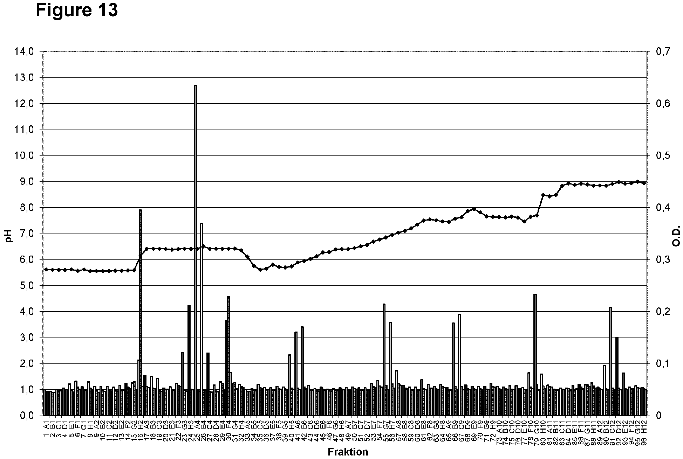

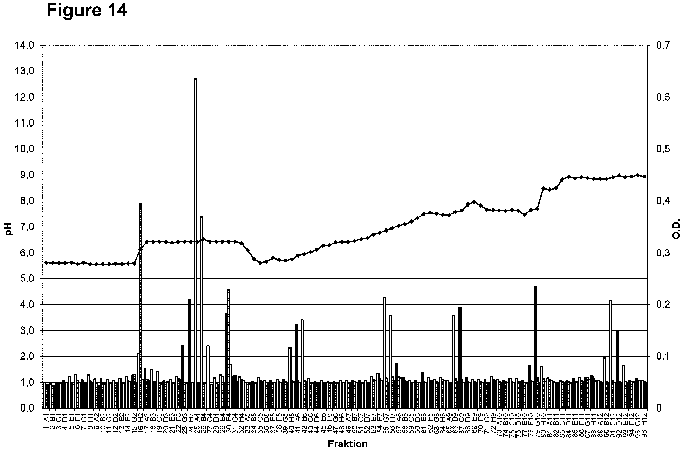

**Figures 6 to 18** show diagrams illustrating the results of separating an analyte containing mixtures of amphoteric dyes and non-amphoteric dye SPADNS (trisodium 2- (4-sulfophenylazo)-1,8-dihydroxynaphthalene-3,6-disulfonate) using the method of the invention realizing a pH step-gradient, whereby the method was carried out as a continuous free-flow electrophoresis method. The X-axis indicates the fractions obtained at the fraction points, the Y-axis on the left side indicates the pH value measured in the individual fractions (depicted as full diamonds), and the Y-axis on the right side indicates optical density measured at 420 nm, 515 nm and 595 nm (depicted as full columns).
   More details are explained in Example 1.

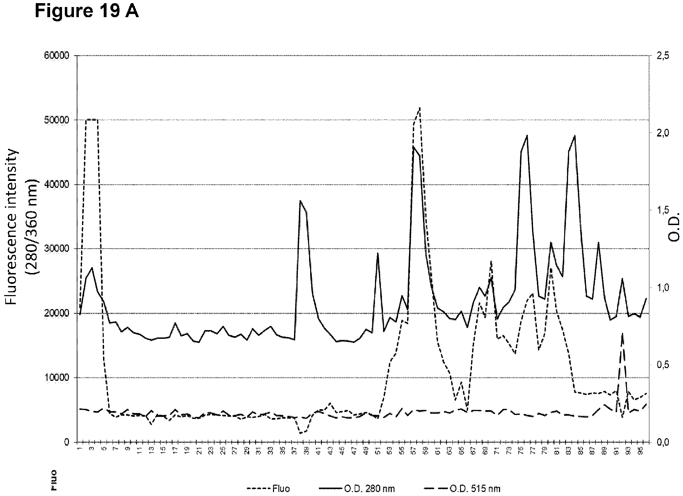

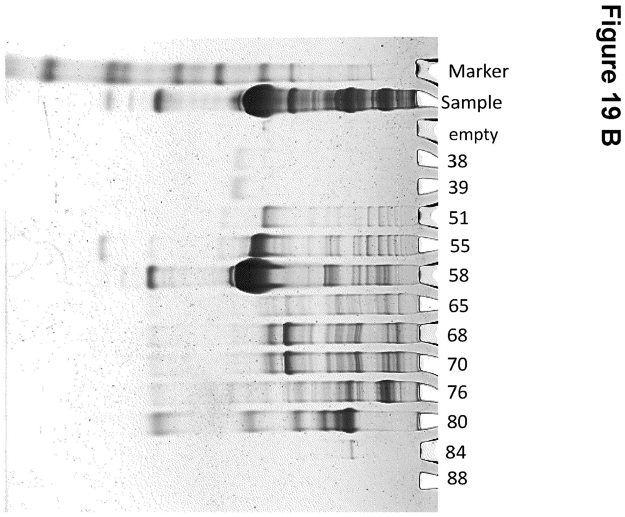

**Figure 19** *Separation of plasma proteins from melanoma plasma.*
   Plasma proteins were separated from a sample of melanoma plasma by using the method of the present invention. Fractions obtained from carrying out the method of the invention were subject to analysis with SDS-PAGE.
   A, The pherogram of the proteins, wherein the OD was measured at 280 nm and 515 nm. Furthermore, fluoresence was measured (280/360 nm).
   B, Selected fractions of the FFE run were subject to the analysis with SDS-PAGE.

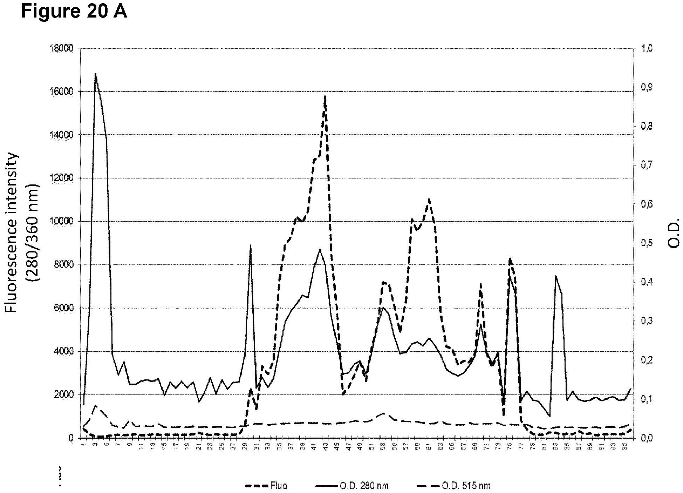

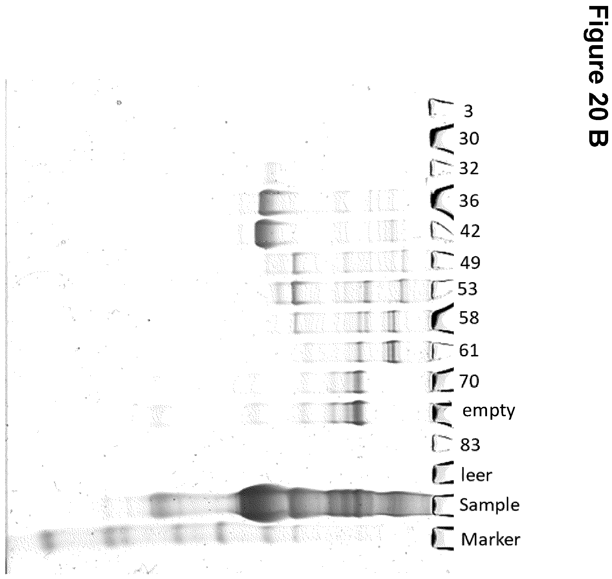

**Figure 20** *Separation of plasma proteins from human plasma.*
   Plasma proteins were separated from a sample of human plasma by using the method of the present invention. Fractions obtained from carrying out the method of the invention were subject to analysis with SDS-PAGE.
   A, The pherogram of the proteins, wherein the OD was measured at 280 nm and 515 nm. Furthermore, fluoresence was measured (280/360 nm).
   B, Selected fractions of the FFE run were subject to the analysis with SDS-PAGE.
**Figure 21** *Separation of a fusion protein.*
   A, shows the pherogram of the isoforms of the fusion protein, wherein the fluoresence was measured (280/360 nm).
   B, Selected fractions of the FFE run were subject to the analysis with IEF-PAGE.

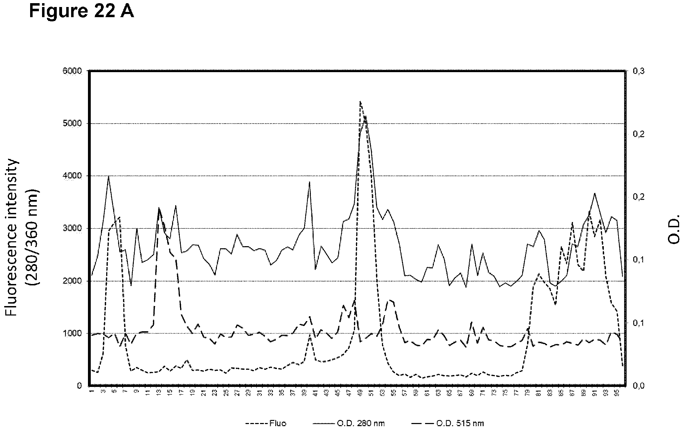

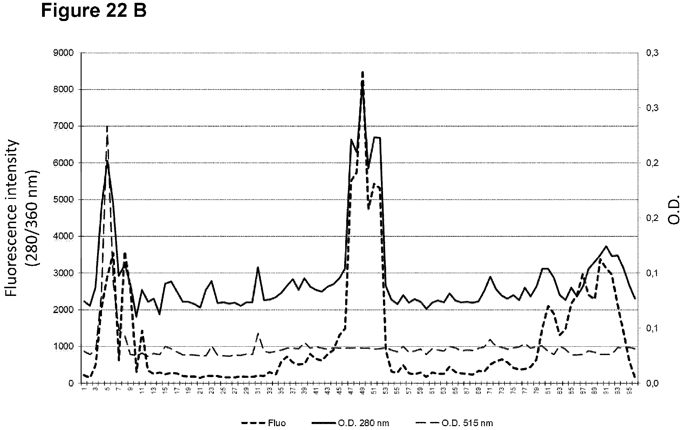

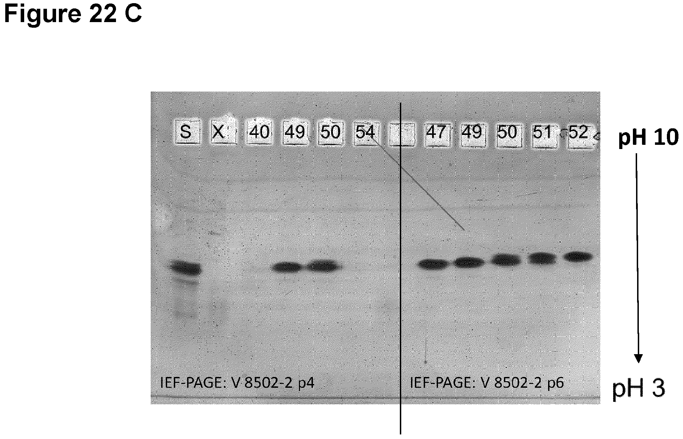

**Figure 22** *Separation of isoforms of β-lactoglobuline.*
   A and B, show the pherogram of the proteins, wherein the fluoresence was measured (280/360 nm).
   C, Selected fractions of the FFE runs were subject to the analysis with IEF-PAGE.
**Figure 23** *Test of conditions for the isolation of exsosomes.*
   Shown is a diagram, wherein the X-axis indicates the fractions obtained at the fraction points, the Y-axis on the left side indicates the pH value measured in the individual fractions (depicted as full diamonds), and the Y-axis on the right side indicates optical density measured at at 420 nm, 515 nm and 595 nm (depicted as full columns).

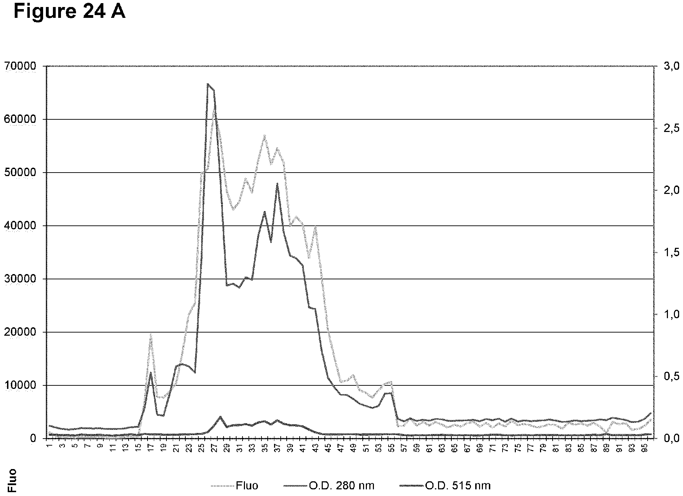

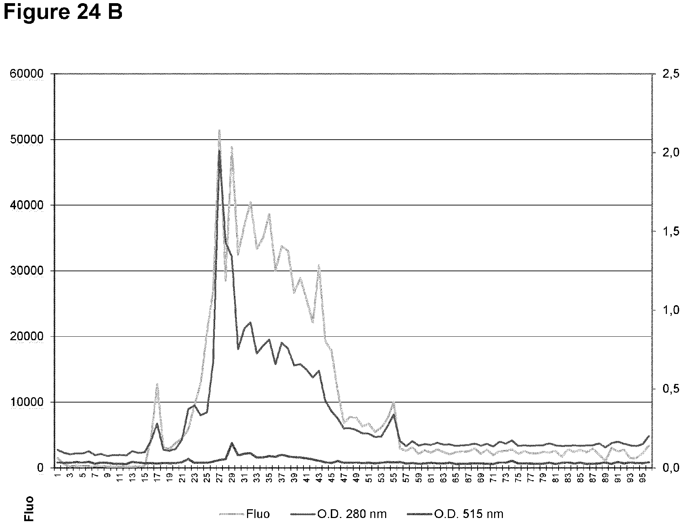

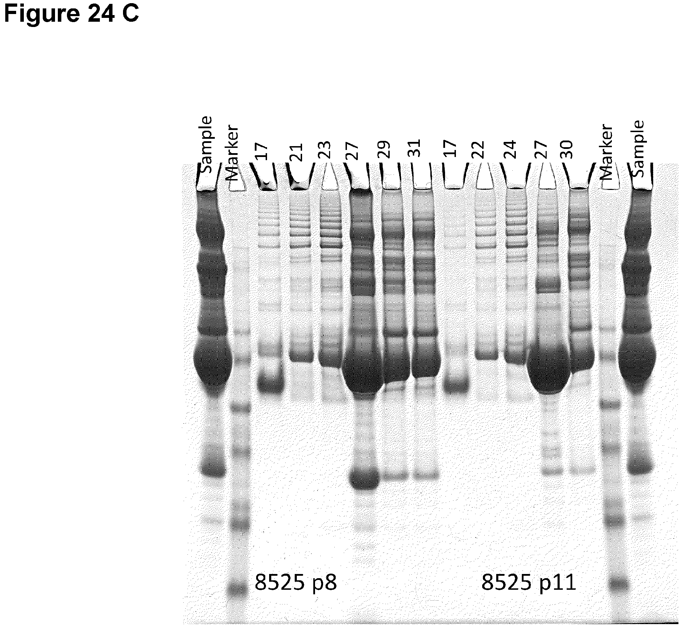

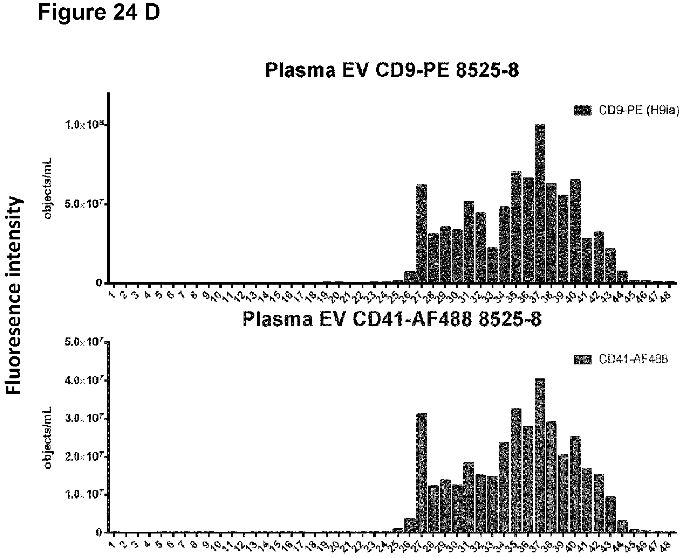

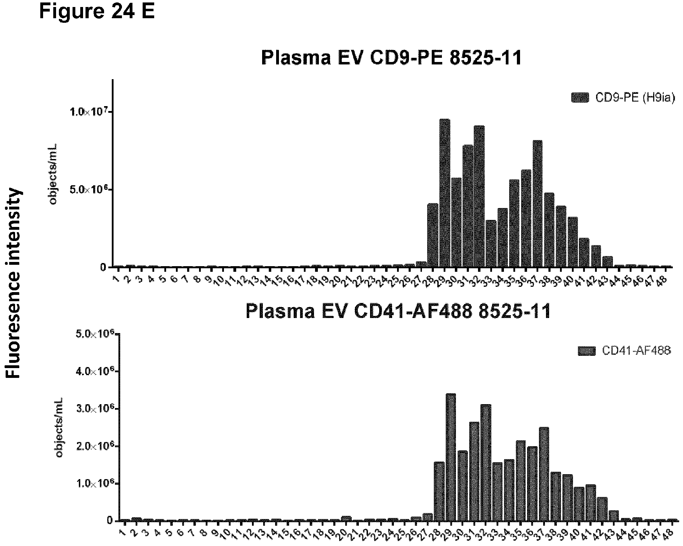

**Figure 24** *Isolation of exsosomesfrom plasma.*
   Exosomes were isolated from a sample of human melanom plasma by using the method of the present invention. Fractions obtained from carrying out the method of the invention were subject to analysis with SDS-PAGE.
   A and B, The pherogram of the proteins (for both experiments 8525 p8 and 8525 p11), wherein the OD was measured at 280 nm and 515 nm. Furthermore, fluoresence was measured (280/360 nm).
   C, Selected fractions of the FFE run were subject to the analysis with SDS-PAGE.
   D and E, shown are exsome marker proteins CD9 and CD41 detected in FFE fractions of both experiments 8525 p8 and 8525 p11 by Amnis (Image stream flow cytometer ISX-FCM).

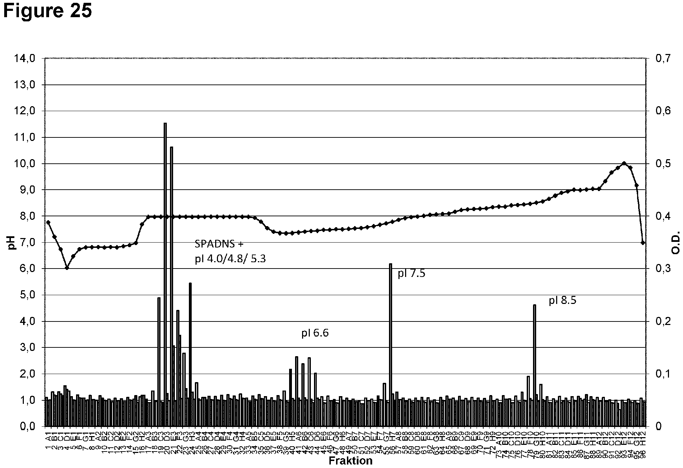

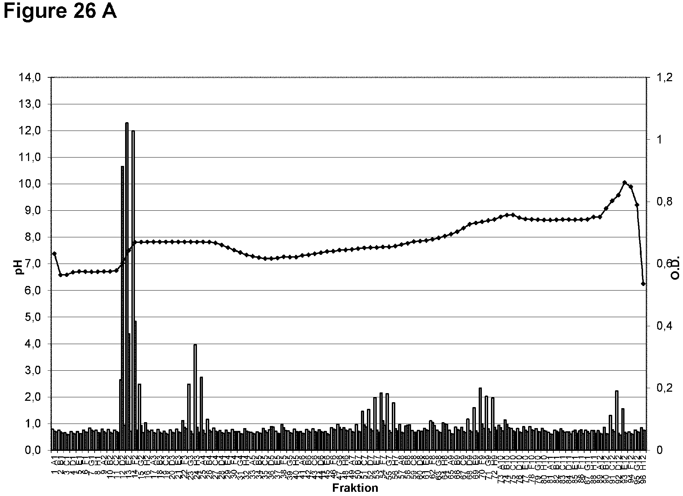

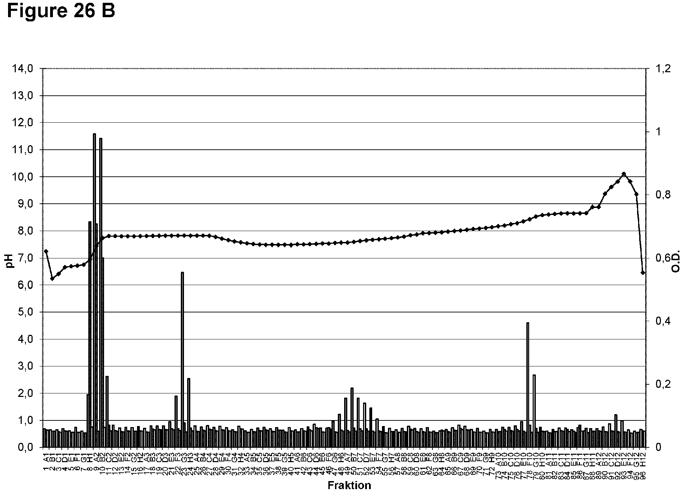

**Figures 25** **and** **26** show diagrams illustrating the results of separating an analyte containing mixtures of amphoteric dyes and non-amphoteric dye SPADNS (trisodium 2- (4-sulfophenylazo)-1,8-dihydroxynaphthalene-3,6-disulfonate), with or without ampholytes, using the method of the invention realizing a pH step-gradient, whereby the method was carried out as a continuous free-flow electrophoresis method. The X-axis indicates the fractions obtained at the fraction points, the Y-axis on the left side indicates the pH value measured in the individual fractions (depicted as full diamonds), and the Y-axis on the right side indicates optical density measured at 420 nm, 515 nm and 595 nm (depicted as full columns).
   More details are explained in Example 6.

### EXAMPLES

The FFE instrument used for all experiments was FFE-Nextgen 220 (FFE Service GmbH, Feldkirchen, Germany). The dimensions of the separation cell are 500 x 100 x 0.2 mm and the electrophoretic conditions were chosen according to the technical specifications of the FFE instrument used (max voltage= 2000 V, max current= 200 mA, max. power 220 W). Therefore all separation media used were adjusted to a value of electrical conductivity within the range of 250 and 500 µmho (µS).

### Example 1 Separation of analytes containing mixtures of amphoteric dyes and non-amphoteric dye SPADNS

Five different mixtures of amphoteric dyes with non-amphoteric dye SPADNS (trisodium 2-(4-sulfophenylazo)-1,8-dihydroxynaphthalene-3,6- disulfonate) were subject to the method of the invention realizing a pH step-gradient and using different acid/base pairs as separation media, whereby the method was carried out as in the operation modus of continuous free-flow electrophoresis method.

### Mixture 1: SPADNS + pI=4.0/4.8/5.3/6.6/7.5/8.5/10.2

| Experiment # | **Acid (pKₛ)** | **Delta pKₛ** | **Separation media pH steps** | **Stabilisation media** | |
|---|---|---|---|---|---|
| | **Base (pKₛ)** | | | **anodic** | **cathodic** |
| 8502 p4 | Propionic acid (5) | 1.0 (pH 4.7 - 6.5) | 5.0/5.0/5.15/5.3/ 5.5/5.7/6.5/6.5 | pH 5.0 | pH 7.02 |
| 8501 p4 | Histidin (6) | | | | |
| 85011 p6 | | | | | |
| 8502-2 p3 | | | | | |
| 8495 p18 | MES (6.1) | 0.9 (pH 5.5 - 7.5) | 5.49/5.5/5.5/5.9/ 6.3/6.7/7.1/7.5 | pH 5.5 | pH 9.05 |
| 8495 p10 | Morpholinoethanol (7.0) | | | | |
| 8495 p16 | | | | | |
| 8495 p14 | | | | | |
| 8503 p4 | MOPSO (6.9) | 0.1 (pH 6.3 - 7.5) | 6.4/6.6/6.8/7.0/ 7.15/7.3/8.20 | pH 6.85 | pH 9.10 |
| | Morpholinoethanol (7.0) | | | | |

In experiments # 8502 p4 to # 8502-2 p3, mixture 1 was injected at individual separation medium 8 with 1.2 to 0.3 ml/h; separation was conducted at
1200 V and 91 mA for 4.5 min in continuous mode at a media speed of about 1.2 ml/h (experiment # 8502 p4);
1200 V and 91 mA for 7 min in continuous mode at a media speed of about 0.72 ml/h (experiment # 8501 p4);
1200 V and 92 mA for 12 min in continuous mode at a media speed of about 0.36 ml/h (experiment # 85011 p6);
1200 V and 91 mA for 15 min in continuous mode at a media speed of about 0.3 ml/h (experiment # 8502-2 p3).

In experiments # 8495 p18 to # 8496 p14, mixture 1 was injected at individual separation medium 8 with 0.25 to 0.65 ml/h; separation was conducted at
1100 V and 90 mA for 4.5 min in continuous mode at a media speed of about 1.3 ml/h (experiment # 8495 p18);
1100 V and 88 mA for 7 min in continuous mode at a media speed of about 1.3 ml/h (experiment # 8495 p10);
1100 V and 89 mA for 12 min in continuous mode at a media speed of about 0.7 ml/h (experiment # 8495 p16);
1100 V and 88 mA for 23 min in continuous mode at a media speed of about 0.5 ml/h (experiment # 8496 p14).

In experiment # 8503 p4, mixture 1 was injected at individual separation medium 8; separation was conducted at
1100 V and 81 mA for 23 min in continuous mode of operation (experiment # 8503 p4).

The results are shown in Figures 6 to 14, which display the profile of pH-values and the concentration profiles of the separated analytes inside the sample mixtures.

The results show that the method of the present invention and the media used are higly suitable for different separation times in the ZE modus (such as fast separation at about 4 min, and finer separation at about 7 min) and for isoelectric focusing (time period of 20 to 23 min).

### Mixture 2: SPADNS + pI=4.0/4.8/5.3/6.6/7.2/7.5/7.9/8.5/10.2

| Experiment # | **Acid (pKₛ)** | **Delta pKₛ** | **Separation media pH steps** | **Stabilisation media** | |
|---|---|---|---|---|---|
| | **Base (pKₛ)** | | | **anodic** | **cathodic** |
| 8474 p4 | MOPS (7.2) | 0.6 (pH 6.6 - 8.4) | 6.68/7.16/7.35/7.5 /7.65/7.8/7.95 | pH 7.2 | pH 8.97 |
| | Triethanolamine (TEA) (7.8) | | | | |

Mixture 2 was injected at individual separation medium 8 with 0.5 ml/h; separation was conducted at 1100 V and 86 mA for 23 min in continuous mode of operation.

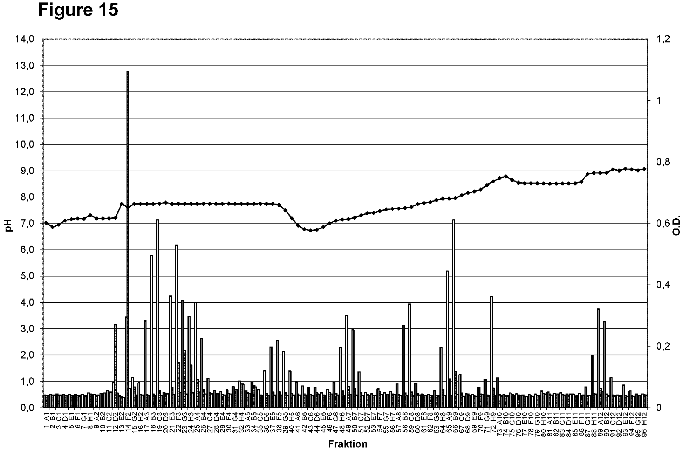

The results are shown in Figure 15.

### Mixture 3: SPADNS + pI=4.0/4.8/5.3/6.6/7.5/7.9/8.5/10.2

| Experiment # | **Acid (pKₛ)** | **Delta pKₛ** | **Separation media pH steps** | **Stabilisation media** | |
|---|---|---|---|---|---|
| | **Base (pKₛ)** | | | **anodic** | **cathodic** |
| 8465 p4 | HEPES (7.5) | 0.3 (pH 7.0 - 8.4) | 7.0/7.31/7.55/7.63 /7.84/7.98/8.18 | pH7.0 | pH 8.93 |
| | Triethanolamine (TEA) (7.8) | | | | |

Mixture 3 was injected at individual separation medium 8 with 0.5 mµl/h; separation was conducted at 1000 V and 45 mA for 23 min in continuous mode of operation.

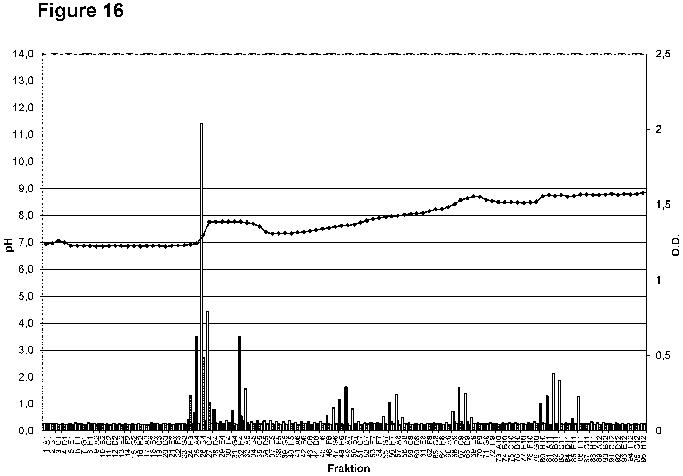

The results are shown in Figure 16.

### Mixture 4: SPADNS + pI=7.5/7.9/8.5

| Experiment # | **Acid (pKₛ)** | **Delta pKₛ** | **Separation media pH steps** | **Stabilisation media** | |
|---|---|---|---|---|---|
| | **Base (pKₛ)** | | | **anodic** | **cathodic** |
| 8510 p4 | TAPS (8.4) | -0.6 (pH 8-9) | 7.5/7.8/8.1/8.3/8.5 /8.9/9.1/9.1 | pH 6.8 | pH 9.48 |
| | Triethanolamine (TEA) (7.8) | | | | |

Mixture 4 was injected at individual separation medium 2 with 0.25 ml/h; separation was conducted at 1500 V and 62 mA for 20 min in continuous mode of operation.

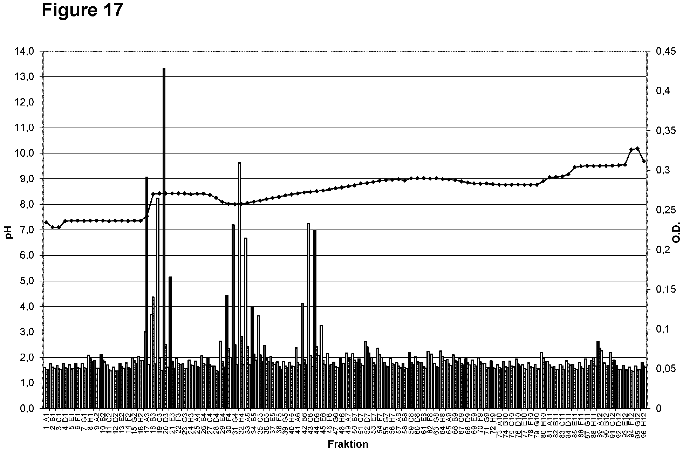

The results are shown in Figure 17.

### Mixture 5: pl=7.5/7.9/8.5

| Experiment # | **Acid (pKₛ)** | **Delta pKₛ** | **Separation media pH steps** | **Stabilisation media** | |
|---|---|---|---|---|---|
| | **Base (pKₛ)** | | | **anodic** | **cathodic** |
| 8509 p8 | ACES (6.9) | 0.9 (pH 6.3 - 8.4) | 6.6/6.3/6.6/6.9/7.2 /7.5/7.8/8.1 | pH 6.6 | pH 9.06 |
| | Triethanolamine (TEA) (7.8) | | | | |

Mixture 5 was injected at individual separation medium 2 with 0.3 ml/h; separation was conducted at 1600 V and 210 mA for 20 min in continuous mode of operation.

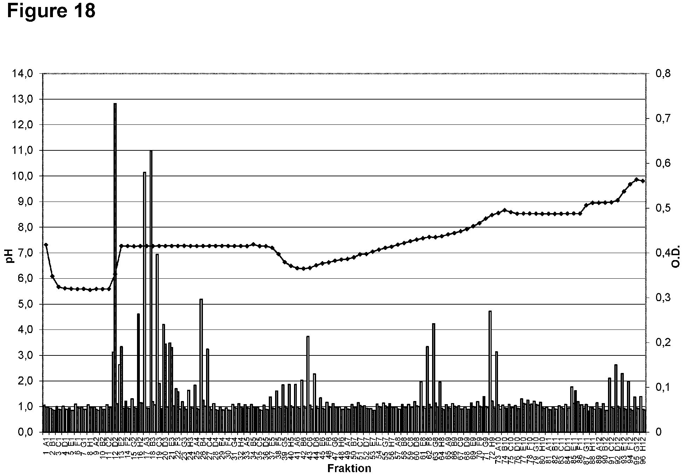

The results are shown in Figure 18.

### Example 2 Separation of plasma proteins

### 2.1 Melanoma plasma

Plasma proteins were separated from a sample of melanoma plasma (donation of University Clinics of Erlangen) by using the method of the present invention. Fractions obtained from carrying out the method of the invention were subject to analysis with SDS-PAGE.

| Experiment # | **Acid (pKₛ)** | **Delta pKₛ** | **Separation media pH steps** | **Stabilisation media** | |
|---|---|---|---|---|---|
| | **Base (pKₛ)** | | | **anodic** | **cathodic** |
| 8479 p22 | Propionic acid (5.0) | 1.0 (pH 4.7 - 6.5) | 4.5/4.5/4.9/5.3/5.7 /6.1/6.5/6.5 | pH 4.8 | pH 7.08 |
| | Histidin (6.0) | | | | |

Pure, undiluted melanoma plasma was injected at individual separation medium 8 with 1.5 ml/h; separation was conducted at 1100 V and 97 mA for 7 min in continuous mode of operation.

The results are shown in Figure 19A and B. Figure 19A shows the pherogram of the proteins, wherein the OD was measured at 280 nm and 515 nm. Furthermore, fluoresence was measured (280/360 nm).

Selected fractions of the FFE run were subject to the analysis with SDS-PAGE. The results, as shown in Figure 19B, display an excellent quality of separation, especially the bandwidth of human albumin is small and without any tendency of tailing.

### 2.2 Human plasma

Plasma proteins were separated from a sample of human plasma (donation of University Clinics of Essen) by using the method of the present invention. Fractions obtained from carrying out the method of the invention were subject to analysis with SDS-PAGE.

| Experiment # | **Acid (pKₛ)** | **Delta pKₛ** | **Separation media pH steps** | **Stabilisation media** | |
|---|---|---|---|---|---|
| | **Base (pKₛ)** | | | **anodic** | **cathodic** |
| 8496 p15 | MES (6.1) | 0.9 (pH 5.5 - 7.5) | 5.49/5.5/5.5/5.9/6. 3/6.7/7.1/7.5 | pH 5.5 | pH 9.05 |
| | Morpholinoethanol (7.0) | | | | |

Pure human plasma was injected at individual separation medium 8 with 1 ml/h; separation was conducted at 1170 V and 95 mA for 7 min in continuous mode of operation.

The results are shown in Figure 20A and B. Figure 20A shows the pherogram of the proteins, wherein the OD was measured at 280 nm and 515 nm. Furthermore, fluoresence was measured (280/360 nm).

Selected fractions of the FFE run were subject to the analysis with SDS-PAGE. The results, as shown in Figure 20B, display an excellent quality of separation, especially the bandwidth of human albumin is small and without any tendency of tailing.

Furthermore, Examples 2.1 and 2.2, where heterogenic plasma samples were used, show the buffer capacity of the separation media according to the present invention. Even in case of a high sample entry with protein (up to 400 mg/h) in the neighboring fractions (with higher pI value) minor amounts of albumin are detectable, even though in reports about analytical electrophoresis methods contaminations of neighboring fractions with albumin are described, and this effect is called "albumin train" (see e.g. Latner *et al.,* 1965).

### Example 3 Separation of a fusion protein

Aflibercept which is commercially available in pharmacies under the tradename Eylea or Zaltrap was separated into various isoforms differing in their glycosylation using the method of the present invention. Aflibercept is a recombinant fusion protein consisting of vascular endothelial growth factor (VEGF)-binding portions from the extracellular domains of human VEGF receptors 1 and 2, that are fused to the Fc portion of the human IgG1 immunoglobulin.

| Experiment # | **Acid (pKₛ)** | **Delta pKₛ** | **Separation media pH steps** | **Stabilisation media** | |
|---|---|---|---|---|---|
| | **Base (pKₛ)** | | | **anodic** | **cathodic** |
| 8503 p9 | MOPSO (6.9) | 0.1 (pH 6.3 - 7.5) | 6.4/6.6/6.8/7.0/ 7.15/7.3/8.20 | pH 6.85 | pH 9.10 |
| | Morpholinoethanol (7.0) | | | | |

The sample was injected at individual separation medium 8 with 2 mg protein/h; separation was conducted at 1100 V and 81 mA for 23 min in continuous mode of operation.

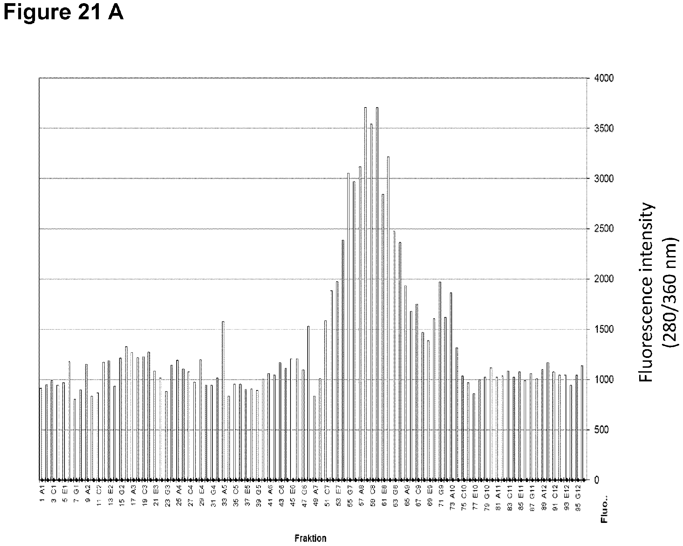

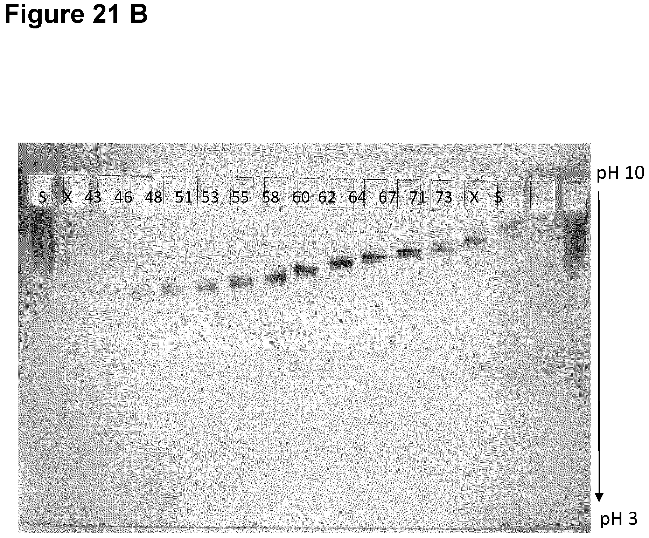

The results are shown in Figure 21A and B. Figure 21A shows the pherogram of the isoforms of the fusion protein, wherein the fluoresence was measured (280/360 nm).

Selected fractions of the FFE run were subject to the analysis with IEF-PAGE. The results, as shown in Figure 21B, display an excellent quality of separation.

We show the successul use of the separation medium with Morpholinethanol/MOPSO (the only additiva are glycerol and mannitol) for the separation of isoforms of a fusion protein. The isoelectric focusing was accomplished without the need for commercial ampholytes and without a polymer as "stabilizer".

### Example 4 Separation of isoforms of β-lactoglobuline

Isoforms of β-lactoglobuline were separated from the commercially available product L-3908 from Sigma-Aldrich by using the method of the present invention.

| Experiment # | **Acid (pKₛ)** | **Delta pKₛ** | **Separation media pH steps** | **Stabilisation media** | |
|---|---|---|---|---|---|
| | **Base (pKₛ)** | | | **anodic** | **cathodic** |
| 8502-2 p4 | Propionic acid (5) | 1.0 (pH 4.7 - 6.5) | 5.0/5.0/5.15/5.3/5. 5/5.7/6.5/6.5 | pH 5.0 | pH 7.12 |
| 8502-2 p6 | Histidin (6) | | | | |

The sample is dissolved in separation medium with pH 6.5 and was injected at individual separation medium 8 (pH 6.5, next to the cathodic stabilisation medium) with 1-2 ml/h; separation was conducted at
1200 V and 89 mA for 15 min in continuous mode (experiment # 8502-2 p4);
1200 V and 89 mA for 23 min in continuous mode (experiment # 8502-2 p6).

The results are shown in Figure 21 to C. Figures 21A and B show the pherogram of the proteins, wherein the fluoresence was measured (280/360 nm).

Selected fractions of the FFE runs were subject to the analysis with IEF-PAGE. The results, as shown in Figure 21C, display an excellent quality of separation of the isoforms of lactoglobuline with a small difference of ΔpI=0.15.

Moreover, the separation quality of analytical IEF-PAGE can be achieved with the FFE method of the present invention.

### Example 5 Isolation of exosomes from plasma

At first, a test was carried out with the mixture: SPADNS + pl=4.0/4.8/5.3/6.6/7.5/8.5

| Experiment # | **Acid (pKₛ) Base (pKₛ)** | **Delta pKₛ** | **Separation media pH steps** | **Stabilisation media** | |
|---|---|---|---|---|---|
| | | | | **anodic** | **cathodic** |
| 8525 p06 | Propionic acid (5.0) Histidin (6.0) | 1.0 (pH 4.7 - 6.5) | 4.9/5.7/6.5 | pH 4.9 | pH 6.5 |

The sample mixture was injected at individual separation medium 3 (pH 6.5, next to the cathodic stabilisation medium) with 1.5 ml/h; separation was conducted at 1200 V and 122 mA for 2 min in continuous mode of operation

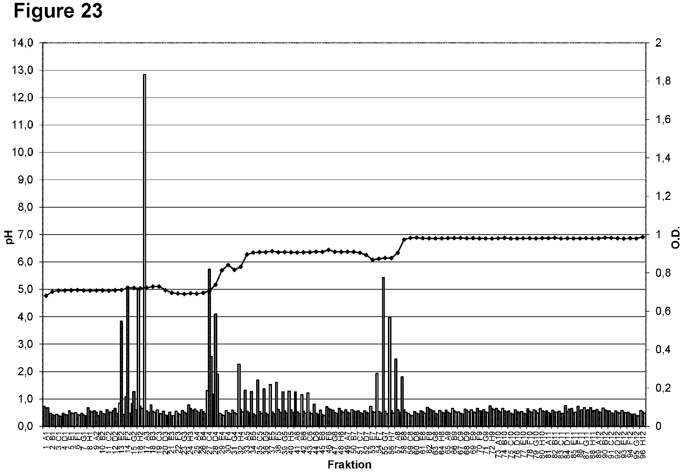

The results are shown in Figure 23.

Then, exosomes were separated from a sample of melanoma plasma (donation of University Clinics of Erlangen).

| Experiment # | **Acid (pKₛ) Base (pKₛ)** | **Delta pKₛ** | **Separation media pH steps** | **Stabilisation media** | |
|---|---|---|---|---|---|
| | | | | **anodic** | **cathodic** |
| 8525 p8 | Propionic acid (5.0) Histidin (6.0) | 1.0 (pH 4.7 - 6.5) | 4.9/5.7/6.5 | pH 4.9 | pH 6.5 |
| 8525 p11 | | | | | |

The undiluted sample was injected at individual separation medium 3 (pH 6.5, next to the cathodic stabilisation medium) with 5.0 ml/h (experiment # 8525 p8) or 2.5 ml/h (experiment # 8525 p11); separation was conducted at 1000 V and 131 mA for 2 min in continuous mode of operation.

The results are shown in Figure 24.

Figures 24A and B show the pherogram of the proteins for both experiments 8525 p8 and 8525 p11, wherein the OD was measured at 280 nm and 515 nm. Furthermore, fluoresence was measured (280/360 nm).

Selected fractions of the FFE run were subject to the analysis with SDS-PAGE. The results, as shown in Figure 24C, display an excellent quality of separation; subfractions can be discriminated. The FFE separation can be run with a high sample throughput (5 ml undiluted sample per hour).

Selected fractions of the FFE run were subject to analysis with Amnis (Image stream flow cytometer ISX-FCM). During the measurement, the exosomes stay intact. CD9 and CD41 which are abundant exosome marker proteins of a relatively large population of plasma exosomes. CD9 and CD41 are stably integrated into the vesicular surface and can be detected using fluorescence-labelled specific antibodies (PE-labelled anti-CD9 and Alexa Fluor 488-labelled anti-CD41). The results (of both experiments 8525 p8 and 8525 p11) are shown in Figures 24D and E. In the ISX-FCM, the fluorescence intensity is measured which correlates with the amount of marker onto which the fluorescence-labelled binds.

### Example 6 Separation utilizing ampholytes

A mixture of amphoteric dyes with non-amphoteric dye SPADNS (trisodium 2-(4-sulfophenylazo)-1,8-dihydroxynaphthalene-3,6- disulfonate) ("Mixture 6"), with or without the addition of ampholytes, was subject to the method of the invention realizing a pH step-gradient and using different acid/base pairs as separation media, whereby the method was carried out as in the operation modus of continuous free-flow electrophoresis method.

### Mixture 6: SPADNS + pI=4.0/4.8/5.3/6.6/7.5/8.5 + 0.5% Sepalyte 7-9

Sepalyte 7-9 was obtained from ProTec Bioseparation, Heidelberg.

| Experiment # | **Acid (pKₛ) Base (pKₛ)** | **Delta pKₛ** | **Separation media pH steps** | **Stabilisation media** | |
|---|---|---|---|---|---|
| | | | | **anodic** | **cathodic** |
| 8522 p10 | TES (7.5) TRIS (8.4) | 0.9 (pH 6.9 - 9.0) | 7.18/7.41/7.48/ 7.63/7.8/8.0/8.45 | pH 7.2 | pH 9.2 |

Mixture 6 with 0.5% Sepalyte 7-9 was injected at individual separation medium 1 (next to the anodic stabilisation medium) with 0.35 ml/h; separation was conducted at 1550 V and 92 mA for 23 min in continuous mode of operation.

The results are shown in Figure 25.

### Mixture 6: SPADNS + pI=4.0/4.8/5.3/6.6/7.5/8.5

| Experiment # | **Acid (pKₛ) Base (pKₛ)** | **Delta pKₛ** | **Separation media pH steps** | **Stabilisation media** | |
|---|---|---|---|---|---|
| | | | | **anodic** | **cathodic** |
| 8523 p4 | TES (7.5) TEA (7.8) | 0.3 | 6.6/7.1/7.35/7.5/7. 65/7.85/8.1 | pH 6.8 | pH 9.58 |

Mixture 6 was injected at individual separation medium 1 (next to the anodic stabilisation medium) with 0.4 ml/h; separation was conducted at 1600 V and 80 mA for 23 min in continuous mode of operation.

The results are shown in Figure 26A.

### Mixture 6: SPADNS + pI=4.0/4.8/5.3/6.6/7.5/8.5 + 1% Servalyt^{™} 6-8

SERVALYT^{™} 6-8 was obtained from SERVA Electrophoresis GmbH, Heidelberg.

| Experiment # | **Acid (pKₛ) Base (pKₛ)** | **Delta pKₛ** | **Separation media pH steps** | **Stabilisation media** | |
|---|---|---|---|---|---|
| | | | | **anodic** | **cathodic** |
| 8522 p10 | TES (7.5) TEA (7.8) | 0.3 | 6.8/7.15/7.3/7.43/ 7.53/7.7/8.1 | pH 6.8 | pH 9.58 |

Mixture 6 with 1% Servalyt 6-8 was injected at individual separation medium 1 (next to the anodic stabilisation medium) with 0.4 ml/h; separation was conducted at 1600 V and 102 mA for 23 min in continuous mode of operation.

The results are shown in Figure 26B.

The results show that by adding the ampholytes the pH profiles can be flattened while the pH differences of the neighboring FFE fractions are very small.

The features disclosed in the foregoing description, in the claims and/or in the accompanying drawings may, both separately and in any combination thereof, be material for realizing the invention in diverse forms thereof.

### REFERENCES

Bier M et. al. Electrophoresis 14, 1011-1018 (1993).
Latner AL, Park DC: Clinical Chemical Acts Vol 11 Issue 6 (1965) 538-546.

## Claims

1. A method for separating at least one analyte of interest from a sample containing a mixture of analytes, said method comprising:
- performing a free flow electrophoresis (FFE) on said sample using at least two aqueous separation media for separating analytes by FFE, by flowing said at least two aqueous separation media in a flow direction in a separation chamber and by applying an electric field between two electrodes across said separation chamber;
wherein, in said at least two aqueous separation media, each of said aqueous separation media comprises a pair of a buffer acid and a buffer base, each of said buffer acid and buffer base having a pKₐ-value, pKₐ(acid) and pKₐ(base), respectively, wherein, for each of said at least two aqueous separation media, said buffer acid and said buffer base are chosen such that | pKₐ(acid) - pKₐ(base) | ≤ 1.5.

2. The method according to any of claim 1, wherein said method comprises:
- performing a FFE on said sample using a plurality of aqueous separation media for separating analytes by FFE;
wherein, in said plurality of aqueous separation media, each of said aqueous separation media comprises a pair of a buffer acid and a buffer base, each of said buffer acid and buffer base having a pKₐ-value, pKₐ(acid) and pKₐ(base), respectively, wherein, for each of said aqueous separation media, said buffer acid and said buffer base are chosen such that | pKₐ(acid) - pKₐ(base) | ≤ 1.5, wherein, preferably, in said plurality of aqueous separation media, there are at least 3, 4, 5, 6, 7, 8, 9, 10, 11, 12, 13, 14, 15, 16, 17, 18, 19 or 20 aqueous separation media, preferably at least 3, 4, 5, 6, 7, 8, 9 or 10 aqueous separation media.

3. The method according to any of claims 1 to 2, wherein said buffer acid and said buffer base are chosen such that | pKₐ(acid) - pKₐ(base) | ≤ 1.0.

4. The method according to any of claims 1 to 3, wherein, in said at least two aqueous separation media or in said plurality of aqueous separation media, at least 2, preferably at least 3, 4, 5, 6, 7, 8, 9, 10 or all of said separation media differ from each other in their respective pH,
and/or wherein the pH is increasing from the anode in the direction to the cathode.

5. The method according to claim 4, wherein said at least two aqueous separation media or said plurality of aqueous separation media are flowed adjacent to each other in a flow direction in said separation chamber, and wherein adjacent separation media differ in their respective pH by ΔpH, wherein 0.01 ≤ ΔpH < 1.5, preferably 0.1 ≤ ΔpH < 1.0.

6. The method according to claim 4, wherein said at least two aqueous separation media or said plurality of aqueous separation media are flowed adjacent to each other in a flow direction in said separation chamber, and wherein adjacent separation media differ in their respective pH by ΔpH, wherein 0.1 ≤ ΔpH < 0.4.

7. The method according to any of claims 1 to 6, wherein said at least two aqueous separation media or said plurality of aqueous separation media are flowed adjacent to each other in a flow direction in said separation chamber, and wherein at least 2 of said separation media which are flowed adjacent to each other have the same pH.

8. The method according to any of the foregoing claims, wherein said free flow electrophoresis (FFE) is performed as:
a) continuous free flow electrophoresis (continuous FFE), or
b) interval free flow electrophoresis (interval FFE),
wherein in continuous FFE, after loading of a sample containing or suspected of containing an analyte of interest, an electrical current is applied continuously whilst said aqueous aqueous separation medium or aqueous separation media is/are flowed in said flow direction in said separation chamber; and
wherein in interval FFE, after loading of a sample containing or suspected of containing an analyte of interest, the flow of aqueous separation medium or media is turned off and an electrical current is applied only whilst the flow of aqueous separation medium or media is turned off, and wherein, after a desired electrophoretic separation has been achieved, the application of said electrical current is stopped and the flow of aqueous separation medium is resumed.

9. The method according to claim 8, wherein the analyte of interest has an isoelectric point pI > 7 and can be separated, preferably via the mode of cationic separation, in an optimum pH-range pHₒₚₜ , and wherein the pH of one separation medium is chosen to be in such an optimum pH-range pHₒₚₜ, wherein
pHₒₚₜ = pI of said analyte of interest, in case the FFE is performed as a continuous FFE, or
pI-0.6 < pHₒₚₜ ≤ pI, in case the FFE is performed as an interval FFE; or
wherein the analyte of interest has an isoelectric point pI < 7 and can be separated, preferably via the mode of anionic separation, in an optimum pH-range pHₒₚₜ , and wherein the pH of one separation medium is chosen to be in such an optimum pH-range pHₒₚₜ, wherein
pHₒₚₜ = pI of said analyte of interest, in case the FFE is performed as a continuous FFE, or
pI ≤ pHₒₚₜ < pI + 0.6, in case the FFE is performed as an interval FFE.

10. The method according to any of the foregoing claims, wherein said buffer **base** in said pair of a buffer base and a buffer acid is selected from
histidine, bis(2-hydroxyethyl)amino-tris(hydroxymethyl)methane (BISTRIS), N-hydroxyethylmorpholine (morpholinoethanol), triethanolamine (TEA), tris(hydroxymethyl)aminomethane (TRIS), glycine, glycylglycine, β-alanine, piperidine-4-carbonic acid, γ-aminobutyric acid (GABA), ε-aminocaproic acid (EACA), acetylimidazole, creatinine, imidazole, morpholine, ammediole, diethanolamine, ethanolamine, trimethylamine;
and/or wherein said buffer **acid** in said pair of a buffer base and a buffer acid is selected from
propionic acid, 2-(N-morpholino)ethanesulfonic acid (MES), 2-hydroxy-3-morpholin-4-ylpropane-1-sulfonic acid (MOPSO), N-(2-acetamido)-2-aminoethanesulfonic acid (ACES), 2-(4-(2-Hydroxyethyl)-1-piperazinyl)-ethanesulfonic acid (HEPES), 3-(N-morpholino)propanesulfonic acid (MOPS), glycylglycine, 3-[N-tris(hydroxymethyl)methylamino]-2-hydroxypropanesulfonic acid (TAPSO), 2-(bis(2-hydroxyethyl)amino)acetic acid (BICINE), 4-(2-Hydroxyethyl)-1-piperazinepropanesulfonic acid (EPPS), N-(1,1-dimethyl-2-hydroxyethyl)-3-amino-2-hydroxypropanesulfonic acid (AMPSO), 2-(cyclohexylamino)ethanesulfonic acid (CHES), [tris(hydroxymethyl)methylamino]propanesulfonic acid) (TAPS), acetylglycine, mandelic acid, malic acid, aspirine, gluconic acid, acetoacetic acid, barbituric acid, α-hydroxyisobutyric acid (HIBA), glutamic acid, isobutyric acid, acetic acid, nicotinic acid, pivalic acid, picolinic acid, pyridinethansulfonic acid, diacetylacetone, 2-[[1,3-dihydroxy-2-(hydroxymethyl)propan-2-yl]amino]ethanesulfonic acid (TES), veronal, 4-(N-morpholino)butanesulfonic acid (MOBS), triglycine, tricine, N-(2-hydroxyethyl)piperazine-N'-(4-butanesulfonic acid) (HEPBS), N-tris(hydroxymethyl)methyl-4-aminobutanesulfonic acid (TABS), acetylacetone, 3-(cyclohexylamino)-2-hydroxy-1-propanesulfonic acid (CAPSO), glycine, β-alanine, γ-aminobutyric acid (GABA), piperidine-4-carboxylic acid (Pip.4-carb), 4-(cyclohexylamino)-1-butanesulfonic acid (CABS), ε-aminocaproic acid (EACA), acetoacetamide, N,N-dimethyl-acetoacetamide.

11. The method according to any of the foregoing claims, wherein said pair of a buffer base and a buffer acid is selected from
- histidine and propionic acid;
- BISTRIS and propionic acid;
- morpholinoethanol and MES;
- TEA and MOPSO;
- TEA and ACES;
- TEA and MOPS:
- TRIS and HEPES;
- TRIS and TES;
- histidine and MES;
- BISTRIS and MES;
- morpholinoethanol and MOPSO;
- morpholinoethanol and ACES;
- morpholinoethanol and MOPS;
- TEA and HEPES;
- TEA and TES;
- TEA and glycylglycine;
- TRIS and TAPSO;
- TRIS and BICINE;
- histidine and MOPSO;
- histidine and ACES;
- BISTRIS and MOPS;
- morpholinoethanol and EPPS;
- TEA and TAPSO;
- TEA and TAPS;
- TEA and taurine;
- TRIS and AMPSO;
- TRIS and CHES;.
wherein, preferably, for a
- pH of a separation medium in the range of from 4.5 to 6.5, a pair of buffer base and buffer acid is used that is selected from histidine and propionic acid, morpholinoethanol and MES, histidine and MES;
- pH of a separation medium in the range of from 4.5 to 7.0, a pair of buffer base and buffer acid is used that is selected from BISTRIS and propionic acid,
- pH of a separation medium in the range of from 5.5 to 7.0, a pair of buffer base and buffer acid is used that is selected from BISTRIS and MES,
- pH of a separation medium in the range of from 6 to 7.0-7.5, a pair of buffer base and buffer acid is used that is selected from histidine and MOPSO, histidine and ACES, morpholinoethanol and MOPSO, morpholinoethanol and ACES, morpholinoethanol and MOPS;
- pH of a separation medium in the range of from 6.3 to 8.2, a pair of buffer base and buffer acid is used that is selected from TEA and MOPSO, TEA and ACES, BISTRIS and MOPS;
- pH of a separation medium in the range of about 7.5, a pair of buffer base and buffer acid is used that is selected from morpholinoethanol and EPPS, TEA and HEPES, TEA and glycylglycine, TEA and MOPS;
- pH of a separation medium in the range of from 7.6 to 9, a pair of buffer base and buffer acid is used that is selected from TEA and TAPSO, TEA and taurine, TRIS and TAPSO, TRIS and BICINE;
- pH of a separation medium in the range of from 8.2 to 9.4, a pair of buffer base and buffer acid is used that is selected from TRIS and AMPSO, TRIS and CHES.

12. The method according to any of the foregoing claims, wherein in each separation medium, the concentration of said buffer acid is, independently, in a range of from 1 mM to 500 mM, preferably 10 to 50 mM, and the concentration of said buffer base is, independently, in a range of from 1 mM to 500 mM, preferably 10 to 50 mM;
and/or wherein in each of said aqueous separation media, the respective buffer acid is partially dissociated to provide an anion, and the respective buffer base is partially dissociated to provide a cation.

13. The method according to any of the foregoing claims, wherein said analyte of interest is selected from cells, cell compartments, exosomes, nanoparticles, nanobeads, nanodiscs, viruses, biological compounds,
said biological compounds preferably being selected from proteins, nucleic acids, lipids, fats, carbohydrates, and secondary metabolites,
wherein, more preferably, said biological compounds are charged molecules.

14. The method according to claim 13, wherein said analyte of interest is a biological compound, which is plasma protein(s), a fusion protein and/or isoform(s) of a protein.

15. The method according to any of the foregoing claims, wherein furthermore an anode stabilization medium, a cathodic stabilization medium and/or a dosage medium are used;
and/or wherein furthermore an ampholyte is used,
which is preferably utilized for separating isoforms of proteins.

16. A kit suitable for use in a free-flow electrophoresis method, said method being as defined in any of the foregoing claims, wherein the kit comprises
at least two aqueous separation media, and,
optionally, an instruction leaflet,
wherein, in said at least two aqueous separation media, each of said aqueous separation media comprises a pair of a buffer acid and a buffer base, each of said buffer acid and buffer base having a pKₐ-value, pKₐ(acid) and pKₐ(base), respectively, wherein, for each of said at least two aqueous separation media, said buffer acid and said buffer base are chosen such that | pKₐ(acid) - pKₐ(base) | ≤ 1.5,
or wherein said buffer acid and said buffer base are chosen such that | pKₐ(acid) - pKₐ(base) | ≤ 1.0.

17. The kit according to claim 16, comprising
a plurality of aqueous separation media,
wherein, in said plurality of aqueous separation media, each of said aqueous separation media comprises a pair of a buffer acid and a buffer base, each of said buffer acid and buffer base having a pKₐ-value, pKₐ(acid) and pKₐ(base), respectively, wherein, for each of said aqueous separation media, said buffer acid and said buffer base are chosen such that | pKₐ(acid) - pKₐ(base) | ≤ 1.5,
or wherein said buffer acid and said buffer base are chosen such that | pKₐ(acid) - pKₐ(base) | ≤ 1.0,
wherein, preferably, in said plurality of aqueous separation media, there are at least 3, 4, 5, 6, 7, 8, 9, 10, 11, 12, 13, 14, 15, 16, 17, 18, 19 or 20 aqueous separation media preferably at least 3, 4, 5, 6, 7, 8, 9 or 10 aqueous separation media.

18. The kit according to claim 16 or 17, wherein said buffer **base** in said pair of a buffer base and a buffer acid is selected from the buffer bases as defined in claim 10;
and wherein said buffer **acid** in said pair of a buffer base and a buffer acid is selected from the buffer acids as defined in claim 10;
and/or wherein, preferably, said pair of a buffer base and a buffer acid is selected from the pairs as defined in claim 11.
